# EUROPEAN PATENT SPECIFICATION

(11) **EP 3 652 685 B1**
(45) Date of publication and mention of the grant of the patent: **03.09.2025**
(21) Application number: 18831327.4
(22) Date of filing: 06.07.2018
(51) Int. Cl.: G06F 9/451, G06N 5/04, G06Q 30/016, G06N 20/00, G06N 7/00

(54) **SYSTEM AND METHOD FOR IDENTIFYING AND PROVIDING PERSONALIZED SELF-HELP CONTENT WITH ARTIFICIAL INTELLIGENCE IN A CUSTOMER SELF-HELP SYSTEM**
SYSTEM UND VERFAHREN ZUR IDENTIFIZIERUNG UND BEREITSTELLUNG VON PERSONALISIERTEM SELBSTHILFEINHALT MIT KÜNSTLICHER INTELLIGENZ IN EINEM KUNDENSELBSTHILFESYSTEM
SYSTÈME ET PROCÉDÉ D'IDENTIFICATION ET DE FOURNITURE DE CONTENUS D'AUTO-ASSISTANCE PERSONNALISÉS À L'AIDE D'UNE INTELLIGENCE ARTIFICIELLE DANS UN SYSTÈME D'AUTO-ASSISTANCE DE CLIENT

(30) Priority: 14.07.2017 US 201715650236
(43) Date of publication of application: 20.05.2020
(73) Proprietor: Intuit Inc., Mountain View, CA 94043 (US)
(72) Inventor: INDYK, Benjamin, Mountain View California 94043 (US); PODGORNY, Igor A., Mountain View California 94043 (US); WEI, Ling Feng, Mountain View California 94043 (US); SHARAFI, Faraz, Mountain View California 94043 (US)
(74) Representative: D Young & Co LLP
(86) International application number: PCT/US2018/041092
(87) International publication number: WO 2019/014066

(56) References cited:
- US-A1- 2006 085 750
- US-A1- 2012 005 148
- US-A1- 2013 066 693
- US-A1- 2016 196 497
- US-A1- 2017 032 251
- US-A1- 2017 124 184

## Description

### BACKGROUND

A customer self-help system is a system that supports or accompanies one or more other data management systems by helping users of the one or more other data management systems find answers to their questions, without involving live customer support personnel. If a customer self-help system adequately helps a user find a satisfactory answer to the user's question, the user is less likely to seek additional support from live customer support (e.g., telephone support, live chat, text message, etc.). A business benefit of a well-functioning customer self-help system is reduced overhead costs for a company because providing live customer support can be expensive (e.g., sometimes costing the company as much as $25 per use of the live customer support). A well-functioning customer self-help system benefits users by enabling users to find answers to questions more quickly than live customer support because use of live customer support usually involves waiting in a queue for a turn to communicate with customer support personnel.

The quality of a customer self-help system is determined, at least in part, by how well the customer self-help system assists users in finding the customer self-help content for which the users are searching. To assist users in finding customer self-help content, some customer self-help systems provide existing user generated content (e.g., through crowdsourcing) as answers to users' questions. Since user generated content initially exists as personalized responses, the user generated content can be difficult to reuse because it is drafted for a specific set of circumstances. As a result, narrowly drafted user generated content (e.g., answers) encourages subsequent users of a customer self-help system to submit new questions and solicit additional user generated content that are merely variations on existing questions (previously submitted) and existing (previously submitted) user generated content.

One problem with this traditional technique for question and answer submission is that subsequent searches of the customer self-help system may result in multiple answers that are close but that are not exactly the correct answer because multiple user generated content responses have been submitted in response to minor variations to similar questions. Furthermore, it would be practically impossible (e.g., too expensive) to manually generate content to cover all personalized variations to similar questions.

Another problem with the traditional technique for question and answer submission is that subsequent searching users are forced to read responses that may be stylistically incompatible with the users. That is, the response may be a correct answer to a searching user's questions but may be too brief or too long for the users' individual preferences.

Another problem with the traditional technique for question and answer submission is that users may submit poor quality questions by not providing all of the relevant information needed to develop a proper response. This issue leads to elongated threads and frustrated users, who eventually seek out live customer support.

One solution to these multiple problems would be a manual review and revision all of the customer self-help content. However, when thousands or millions of entries are involved, the benefit of manually revising all of the content is too expensive and time consuming to justify and rapidly becomes economically infeasible - if not impossible. As a result, the described problems of traditional customer self-help systems are difficult to fix and remain an unresolved technical problem in the self-help arts.

Consequently, long standing technical problems that exist in customer self-help systems include, but are not limited to: redundant information is requested and submitted; the self-help content is stylistically impersonal and incompatible with users' needs; users submit insufficient information to enable user generated content generators to efficiently provide adequate responses; and manual revision and organization of the self-help content is financially impractical, and in many cases all but impossible.

In this context, US 2017/124184 A1 discloses an approach to identify topics which are relevant to a search term of a user taking context information into account for providing personalized customer support responses.

### SUMMARY

The present invention is defined in the appended independent claims. Advantageous features are set out in the appended dependent claims. Any embodiments or examples of the following description which are not within the scope of the appended claims are provided for illustrative purposes.

Embodiments of the present disclosure address some of the shortcomings associated with traditional customer self-help systems by providing methods and systems that employ artificial intelligence to provide personalized self-help content in response to a user query.

The described embodiments of the customer self-help system transform a self-help content data store into a characterized and categorized organization of self-help content components that is automatically scalable for new service provider generated content and new user generated content. Such embodiments transform the traditional balancing approach between cost and personalization into a highly cost effective and highly personalized platform for users to rapidly and efficiently obtain answers to questions without needing to rely on live customer support.

### BRIEF DESCRIPTION OF THE DRAWINGS

FIG. 1 is a functional block diagram of a production environment for providing personalized self-help content with a customer self-help system, in accordance with various embodiments.
FIG. 2 is a data block diagram of a process for characterizing and categorizing self-help content, in accordance with various embodiments.
FIG. 3 is a data block diagram of an example of a probabilistic topic model based on search terms and user profile characteristics, in accordance with various embodiments.
FIG. 4 is a flow diagram of a process for characterizing and categorizing self-help content, in accordance with various embodiments.
FIGs. 5A and 5B are a flow diagram of a process for analyzing self-help content to identify self-help components within the self-help content, in accordance with various embodiments.
FIG. 6 is a data block diagram of a process for generating personalized self-help content at least partially based on user query, user profile data, and self-help content components, in accordance with various embodiments.
FIG. 7 is a flow diagram of a process for generating personalized self-help content with artificial intelligence in a customer self-help system, in accordance with various embodiments.
FIG. 8 is a data block diagram of a process for generating personalized self-help content with artificial intelligence in a customer self-help system, in accordance with various embodiments.
FIG. 9 is a data block diagram of an example of personalized self-help content, in accordance with various embodiments.
FIG. 10 is a data block diagram of an example of personalized self-help content, in accordance with various embodiments.

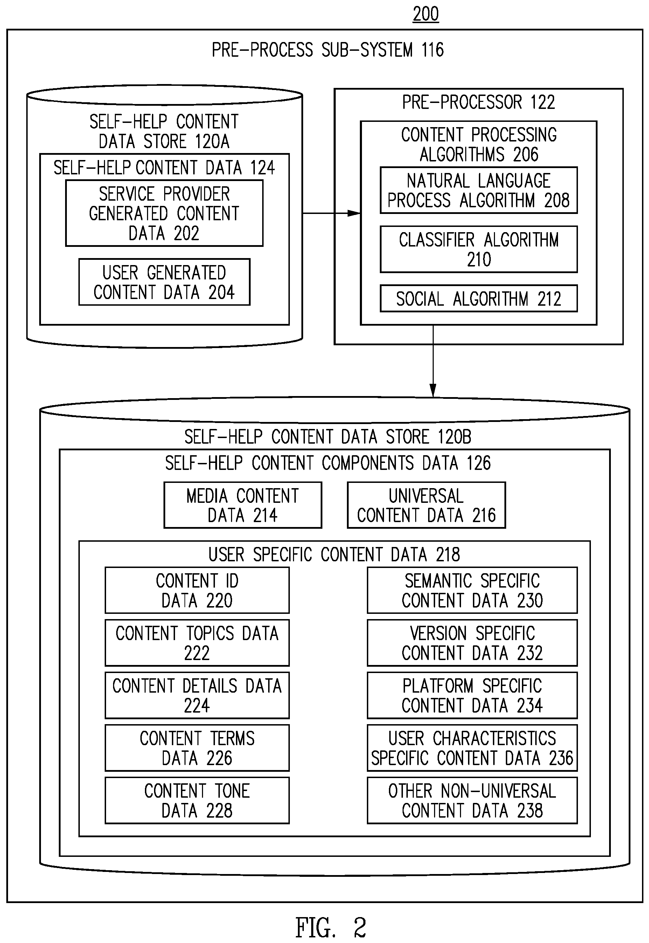

Common reference numerals are used throughout the figures and the detailed description to indicate like elements. It is to be understood that reference numerals ending in letters as tags are examples of variations of like elements, and the tagged reference numerals may or may not be illustrated in the figures. For example, a self-help content data store 120A and a self-help content data store 120B are both represented in FIG. 2 by the reference numeral of 120, in which the ending letter tags of A and B are illustrated. One skilled in the art will readily recognize that the above figures are examples and that other architectures, modes of operation, orders of operation, and elements/functions can be provided and implemented without departing from the characteristics and features of the invention, as set forth in the claims.

### DETAILED DESCRIPTION

Embodiments will now be discussed with reference to the accompanying figures, which depict one or more exemplary embodiments. Embodiments may be implemented in many different forms and should not be construed as limited to the embodiments set forth herein, shown in the figures, and/or described below. Rather, these exemplary embodiments are provided to allow a complete disclosure that conveys the principles of the invention, as set forth in the claims, to those of skill in the art.

Herein, the term "production environment" includes the various components, or assets, used to deploy, implement, access, and use, a given application as that application is intended to be used. In various embodiments, production environments include multiple assets that are combined, communicatively coupled, virtually and/or physically connected, and/or associated with one another, to provide the production environment implementing the application.

As specific illustrative examples, the assets making up a given production environment can include, but are not limited to, one or more computing environments used to implement the application in the production environment such as a data center, a cloud computing environment, a dedicated hosting environment, and/or one or more other computing environments in which one or more assets used by the application in the production environment are implemented; one or more computing systems or computing entities used to implement the application in the production environment; one or more virtual assets used to implement the application in the production environment; one or more supervisory or control systems, such as hypervisors, or other monitoring and management systems, used to monitor and control assets and/or components of the production environment; one or more communications channels for sending and receiving data used to implement the application in the production environment; one or more access control systems for limiting access to various components of the production environment, such as firewalls and gateways; one or more traffic and/or routing systems used to direct, control, and/or buffer, data traffic to components of the production environment, such as routers and switches; one or more communications endpoint proxy systems used to buffer, process, and/or direct data traffic, such as load balancers or buffers; one or more secure communication protocols and/or endpoints used to encrypt/decrypt data, such as Secure Sockets Layer (SSL) protocols, used to implement the application in the production environment; one or more databases used to store data in the production environment; one or more internal or external services used to implement the application in the production environment; one or more backend systems, such as backend servers or other hardware used to process data and implement the application in the production environment; one or more software systems used to implement the application in the production environment; and/or any other assets/components making up an actual production environment in which an application is deployed, implemented, accessed, and run, e.g., operated, as discussed herein, and/or as known in the art at the time of filing, and/or as developed after the time of filing.

As used herein, the terms "computing system," "computing device," and "computing entity," include, but are not limited to, a virtual asset; a server computing system; a workstation; a desktop computing system; a mobile computing system, including, but not limited to, smart phones, portable devices, and/or devices worn or carried by a user; a database system or storage cluster; a switching system; a router; any hardware system; any communications system; any form of proxy system; a gateway system; a firewall system; a load balancing system; or any device, sub-system, or mechanism that includes components that can execute all, or part, of any one of the processes and/or operations as described herein.

In addition, as used herein, the terms computing system and computing entity, can denote, but are not limited to, systems made up of multiple: virtual assets; server computing systems; workstations; desktop computing systems; mobile computing systems; database systems or storage clusters; switching systems; routers; hardware systems; communications systems; proxy systems; gateway systems; firewall systems; load balancing systems; or any devices that can be used to perform the processes and/or operations as described herein.

As used herein, the term "computing environment" includes, but is not limited to, a logical or physical grouping of connected or networked computing systems and/or virtual assets using the same infrastructure and systems such as, but not limited to, hardware systems, software systems, and networking/communications systems. Typically, computing environments are either known environments, e.g., "trusted" environments, or unknown, e.g., "untrusted" environments. Typically, trusted computing environments are those where the assets, infrastructure, communication and networking systems, and security systems associated with the computing systems and/or virtual assets making up the trusted computing environment, are either under the control of, or known to, a party.

In various embodiments, each computing environment includes allocated assets and virtual assets associated with, and controlled or used to create, and/or deploy, and/or operate an application.

In various embodiments, one or more cloud computing environments are used to create, and/or deploy, and/or operate an application that can be any form of cloud computing environment, such as, but not limited to, a public cloud; a private cloud; a Virtual Private Cloud (VPC); or any other cloud-based infrastructure, sub-structure, or architecture, as discussed herein, and/or as known in the art at the time of filing, and/or as developed after the time of filing.

In many cases, a given application or service may utilize, and interface with, multiple cloud computing environments, such as multiple VPCs, in the course of being created, and/or deployed, and/or operated.

As used herein, the term "virtual asset" includes any virtualized entity or resource, and/or virtualized part of an actual, or "bare metal" entity. In various embodiments, the virtual assets can be, but are not limited to, virtual machines, virtual servers, and instances implemented in a cloud computing environment; databases associated with a cloud computing environment, and/or implemented in a cloud computing environment; services associated with, and/or delivered through, a cloud computing environment; communications systems used with, part of, or provided through, a cloud computing environment; and/or any other virtualized assets and/or sub-systems of "bare metal" physical devices such as mobile devices, remote sensors, laptops, desktops, point-of-sale devices, etc., located within a data center, within a cloud computing environment, and/or any other physical or logical location, as discussed herein, and/or as known/available in the art at the time of filing, and/or as developed/made available after the time of filing.

In various embodiments, any, or all, of the assets making up a given production environment discussed herein, and/or as known in the art at the time of filing, and/or as developed after the time of filing, can be implemented as one or more virtual assets.

In one embodiment, two or more assets, such as computing systems and/or virtual assets, and/or two or more computing environments, are connected by one or more communications channels including but not limited to, Secure Sockets Layer communications channels and various other secure communications channels, and/or distributed computing system networks, such as, but not limited to: a public cloud; a private cloud; a combination of different network types; a public network; a private network; a satellite network; a cable network; or any other network capable of allowing communication between two or more assets, computing systems, and/or virtual assets, as discussed herein, and/or available or known at the time of filing, and/or as developed after the time of filing.

As used herein, the term "network" includes, but is not limited to, any network or network system such as, but not limited to, a peer-to-peer network, a hybrid peer-to-peer network, a Local Area Network (LAN), a Wide Area Network (WAN), a public network, such as the Internet, a private network, a cellular network, any general network, communications network, communication channel, or general network/communications network system; a wireless network; a wired network; a wireless and wired combination network; a satellite network; a cable network; any combination of different network types; or any other system capable of allowing communication between two or more assets, virtual assets, and/or computing systems, whether available or known at the time of filing or as later developed.

As used herein, the term "user" includes, but is not limited to, any party, parties, entity, or entities using, or otherwise interacting with any of the methods or systems discussed herein. For instance, in various embodiments, a user can be, but is not limited to, a person, a commercial entity, an application, a service, or a computing system.

As used herein, the term "relationship(s)" includes, but is not limited to, a logical, mathematical, statistical, or other association between one set or group of information, data, and/or users and another set or group of information, data, and/or users, according to one embodiment. The logical, mathematical, statistical, or other association (i.e., relationship) between the sets or groups can have various ratios or correlation, such as, but not limited to, one-to-one, multiple-to-one, one-to-multiple, multiple-to-multiple, and the like, according to one embodiment. As a non-limiting example, if the disclosed system and method for providing access control and enhanced encryption determines a relationship between a first group of data and a second group of data, then a characteristic or subset of a first group of data can be related to, associated with, and/or correspond to one or more characteristics or subsets of the second group of data, or vice-versa, according to one embodiment. Therefore, relationships may represent one or more subsets of the second group of data that are associated with one or more subsets of the first group of data, according to one embodiment. In one embodiment, the relationship between two sets or groups of data includes, but is not limited to similarities, differences, and correlations between the sets or groups of data.

As used herein, the term "data store" or "data storage device" includes, but is not limited to, any physical or virtual data source or storage device. For instance, in various embodiments, a data store or storage container can be, but is not limited to, one or more of a hard disk drive, a solid-state drive, an EEPROM, an optical disk, a server, a memory array, a database, a virtual database, a virtual memory, a virtual data directory, a non-transitory computer-readable medium, or other physical or virtual data sources.

The disclosed method and system for employing artificial intelligence to provide personalized self-help content in response to a user query in a customer self-help system, provides for significant improvements to the technical fields of customer self-help systems, artificial intelligence, data processing, data management, and user experience. As can be appreciated, under a traditional self-help system that uses user generated (e.g., crowdsourced) content, large quantities of self-help content become unmanageable, and become too costly and time-consuming to review and revise. Consequently, quality control and the reputation associated with the self-help system becomes a matter of chance. Embodiments of the present invention use several algorithms as artificial intelligence to identify and aggregate information that is relevant to a user's query, while providing personalized self-help content to the user's query, in a manner that is scalable and more cost efficient than prior art methods of using people to manually review and revise content that is submitted to the customer self-help system.

In one embodiment, the disclosed customer self-help system identifies characteristics of self-help content that is stored by a self-help content data store, and updates the self-help content data store to include the characteristics of the self-help content. This transforms the self-help content data store into a system component that is searchable and that facilitates identifying self-help content that is relevant to user queries, which results in reductions in requests for live customer support. The reduction in requests for live customer support reduces service provider overhead costs.

The method and system for employing artificial intelligence to provide personalized self-help content in response to a user query in a customer self-help system reduces computing cycles, memory usage, and bandwidth usage by helping users more quickly and efficiently obtain relevant answers to queries that are submitted because the entire self-help content data store is characterized and categorized to facilitate more effective searching of the contents of the self-help content data store.

The method and system for employing artificial intelligence to provide personalized self-help content in response to the user query in a customer self-help system identifies user preferences for the style of answer that a user prefers by analyzing the user profile data to determine the query intent of a user query and to determine the type of content to include in the personalized self-help content that is delivered to a user in response to a received user query, according to one embodiment.

The method and system for employing artificial intelligence to provide personalized self-help content in response to the user query in a customer self-help system resolves potential issues with poorly written and poorly submitted user queries, according to one embodiment. For example, some short user queries may be interpreted multiple ways and are therefore ambiguous, without additional context or additional information about a user. The method and system for employing artificial intelligence to provide personalized self-help content resolves potential issues with poorly written and poorly submitted user queries by using user profile data as context for a user query so that the customer self-help and help system provides personalized self-help content with an understanding of the type of operating system, platform, Internet connection, and other characteristics that might impact information that the user seeks in a response to his or her user query, according to one embodiment.

Employing artificial intelligence to provide personalized self-help content in response to a user query in a customer self-help system is a technical solution to a long standing technical problem and is not an abstract idea for at least a few reasons. First, employing artificial intelligence to provide personalized self-help content is not an abstract idea because it is not merely an idea itself (e.g., can be performed mentally or using pen and paper). Second, employing artificial intelligence to provide personalized self-help content is not an abstract idea because it is not a fundamental economic practice (e.g., is not merely creating a contractual relationship, hedging, mitigating a settlement risk, etc.). Third, employing artificial intelligence to provide personalized self-help content is not an abstract idea because it is not a method of organizing human activity (e.g., managing a game of bingo). Fourth, although mathematics may be used in employing artificial intelligence, the disclosed and claimed method and system of employing artificial intelligence to provide personalized self-help content is not an abstract idea because the method and system is not simply a mathematical relationship/formula.

In addition, employing artificial intelligence to provide personalized self-help content allows for significant improvement to the technical fields of user experience, artificial intelligence, data processing, data management, and customer self-help systems, according to one embodiment.

As a result, embodiments of the present disclosure allow for reduced usage of processor cycles, memory, and power consumption, by reducing the time and resources spent by users of a customer self-help systems in repeatedly searching for a relevant or adequate response to their queries. Consequently, computing and communication systems implementing or providing the embodiments of the present disclosure are transformed into more operationally efficient devices and systems.

In addition to improving overall computing performance, employing artificial intelligence to provide personalized self-help content significantly improves the field of data storage systems by reducing the inefficient management of user generated content, according to one embodiment. Therefore, both human and non-human resources are utilized more efficiently. Furthermore, by employing artificial intelligence to provide personalized self-help content, loyalty in the customer self-help system is increased, which results in repeat customers, and reduced abandonment of use of the data storage system, according to one embodiment.

The disclosed embodiments provide one or more technical solutions to the technical problem of customer self-help systems by employing artificial intelligence to provide personalized self-help content. These and other embodiments of the customer self-help system are discussed in further detail below.

### HARDWARE ARCHITECTURE

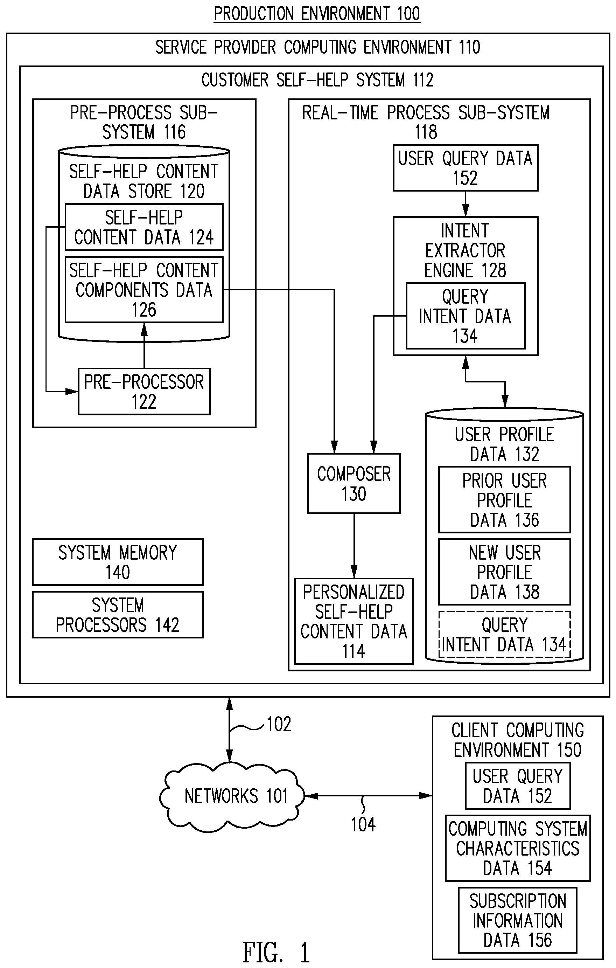

FIG. 1 is a functional block diagram of a production environment 100 for providing personalized self-help content in response to receipt of a user query, in accordance with various embodiments. Embodiments of the present disclosure provide methods and systems for employing artificial intelligence to provide personalized self-help content in response to a user query.

The production environment 100 includes a service provider computing environment 110 and a client computing environment 150. The various computing environments of the production environment 100 are coupled together by one or more physical or virtual networks 101. The computing environments 110 and 150 are communicatively coupled to each other through the one or more physical or virtual networks 101, with a communication channel 102 and a communication channel 104, according to one embodiment.

The service provider computing environment 110 represents one or more computing systems such as a server or distribution center that is configured to receive, execute, and host one or more data storage systems, according to one embodiment. The service provider computing environment 110 represents a traditional data center computing environment, a virtual asset computing environment (e.g., a cloud computing environment), or a hybrid between a traditional data center computing environment and a virtual asset computing environment, according to one embodiment.

The service provider computing environment 110 includes a customer self-help system 112 to receive a user query data 152 from the client computing environment 150 and to provide personalized self-help content data 114 that is responsive to the user query data 152, according to one embodiment. The customer self-help system 112 includes a pre-process sub-system 116 and a real-time process sub-system 118 for generating and providing the personalized self-help content data 114, in response to the user query data 152, according to one embodiment.

The pre-process sub-system 116 analyzes self-help content from a variety of sources and transforms the self-help content into self-help content components that facilitate generating the personalized self-help content data 114, according to one embodiment. The pre-process sub-system 116 includes a self-help content data store 120 and a pre-processor 122 for characterizing and categorizing the self-help content, according to one embodiment.

The self-help content data store 120 includes self-help content data 124 and self-help content components data 126, according to one embodiment. The self-help content data 124 represents self-help content and includes a variety of data representing content that can be provided to the users to answer users' questions, in response to the user query data 152, according to one embodiment. The user query data 152 represents a user query having one or more query terms, according to one embodiment. The self-help content data 124 includes crowdsourced customer support content and service provider content (including definitions content), according to one embodiment.

The self-help content components data 126 are identified by applying the self-help content data 124 to the pre-processor 122, according to one embodiment. The self-help content components data 126 include characteristics of the self-help content data 124 which is categorized or searchable by the characteristics, according to one embodiment. In one embodiment, the self-help content components data 126 are a cloned and modified version of the self-help content data 124. In one embodiment, the self-help content components data 126 represent a modified version of the self-help content data 124 that replaces the self-help content data 124 after being characterized and categorized through the pre-processor 122.

The real-time process sub-system 118 receives the user query data 152 and generates the personalized self-help content data 114 based on an analysis of the user query data 152 by determining which of the self-help content components data 126 to combine to generate the personalized self-help content data 114, according to one embodiment. The real-time process sub-system 118 includes an intent extractor engine 128 and a composer 130 for analyzing the user query data 152 and for determining which of the self-help content components data 126 to use to generate the personalized self-help content data 114, according to one embodiment.

The intent extractor engine 128 receives one or more of the user query data 152 and user profile data 132 to determine a query intent data 134 for the user query data 152, according to one embodiment. The intent extractor engine 128 determines the query intent data 134 by providing the user query data 152 and the user profile data 132 to one or more algorithms, according to what one embodiment. The algorithms of the intent extractor engine 128 include, but are not limited to, one or more natural language processing algorithms, one or more classifier algorithms, and one or more social algorithms, according to various embodiments. The intent extractor engine 128 applies the same one or more algorithms to the user profile data 132 in addition to the user query data 152 to determine the query intent data 134, according to one embodiment. After determining the query intent data 134, the intent extractor engine 128 provides the query intent data 134 to the composer 130, according to one embodiment.

The user profile data 132 includes prior user profile data 136, new user profile data 138, and optionally the determined query intent data 134, according to one embodiment. The prior user profile data 136 includes, but is not limited to, any information about a user that was used or that was collected to prepare a user's tax return, authentication information for user, click-stream data that represents navigation behavior of the user within one or more service provider products or services, and user history within the customer self-help system 112, according to one embodiment. The new user profile data 138 includes information collected about the user in one or more current or recent sessions with the customer self-help system 112, according to one embodiment. In one embodiment, after determining the query intent data 134, the intent extractor engine 128 for the real-time process sub-system 118 updates the user profile data 132 with the query intent data 134, according to one embodiment. The user profile data 132 includes, but is not limited to, data representing one or more of a user's name, a date of birth, an address, a zip code, a home ownership status, a marital status, an annual income, a job title, an employer's address, spousal information, children's information, asset information, medical history, occupation, information regarding dependents, salary and wages, interest income, dividend income, business income, farm income, capital gain income, pension income, individual retirement account ("IRA") distributions, unemployment compensation, education expenses, health savings account deductions, moving expenses, IRA deductions, student loan interest deductions, tuition and fees, medical and dental expenses, state and local taxes, real estate taxes, personal property tax, mortgage interest, charitable contributions, casualty and theft losses, unreimbursed employee expenses, alternative minimum tax, foreign tax credit, education tax credits, retirement savings contribution, child tax credits, residential energy credits, and any other information that is currently used, that can be used, or that may be used in the future to prepare a tax return for a user, according to one embodiment. The user profile data 132 also includes, but is not limited to, computing system characteristics data 154 of the client computing environment 150 and subscription information data 156 of any service provider services subscribed to by a user of the client computing environment 150, according to one embodiment.

The composer receives the query intent data 134 and pulls self-help content components data 126 from the self-help content data store 120 to aggregate one or more self-help content components data 126 into the personalized self-help content data 114, according to the invention. The composer 130 matches characteristics of the query intent data 134 with characteristics of the self-help content components data 126 to determine which of the self-help content components data 126 are responsive to the user query data 152, according to the invention. After identifying one or more of the self-help content components data 126 that have characteristics that are similar to the query intent data 134, the composer 130 combines the identified self-help content components data 126 into the personal personalized self-help content data 114, according to the invention.

The customer self-help system 112 includes system memory 140 and one or more system processors 142 for storing and executing the customer self-help system 112 and the functional components of the customer self-help system 112, according to one embodiment. The system memory 140 includes volatile memory, non-volatile memory, local memory, cloud storage memory, and one or more combinations thereof, according to one embodiment. The one or more system processors 142 execute instructions that represent the customer self-help system 112 that are stored within the system memory 140, according to one embodiment.

The client computing environment 150 includes the user query data 152, computing system characteristics data 154, and subscription information data 156, according to one embodiment. The user query data 152 represents a question or concern that a user submits to the customer self-help system 112 through the client computing environment 150, according to one embodiment. The user query data 152 includes a number of query terms that are analyzed along with the user profile data 132 by the intent extractor engine 128, to enable the composer 130 to generate the personalized self-help content data 114, according to one embodiment.

The computing system characteristics data 154 include characteristics such as, but not limited to, an operating system, a platform manufacturer (Apple or PC), a platform type (e.g., mobile, smart phone, tablet, laptop, desktop,), Internet Protocol ("IP") address, and a ZIP Code of operation for the client computing environment 150, according to one embodiment. The subscription information 106 identifies contractual relationships between a user and the service provider for the use of one or more products or services provided by the service provider (e.g., the customer self-help system 112 or one or more financial management systems), according to one embodiment.

Although several features of the customer self-help system 112 are represented by various illustrated or described functional representations, any of the functional representations may be combined into fewer functional representations or may be further separated into further functional representations, according to various embodiments.

### PROCESSES

FIG. 2 illustrates a process 200 of characterizing and categorizing self-help content into self-help content components and updating a self-help content data store with the self-help content components, to transform the self-help content data store into a data store that facilitates generating personalized self-help content by a composer of the customer self-help system 112 (shown in FIG. 1), according to one embodiment. Referring to FIGs. 1 and 2 together, the process 200 is illustrated with the pre-process sub-system 116, according to one embodiment. The self-help content data store 120 is implemented and illustrated as a self-help content data store 120A and a self-help content data store 120B, according to one embodiment. The self-help content data store 120A represents the self-help content data store 120 before the self-help content data store 120 is updated to include or be categorized with the self-help content components data 126, according to one embodiment. The self-help content data store 120B represents the self-help content data store 120 after the self-help content data store 120 has been updated with the self-help content components data 126.

The self-help content data store 120A includes the self-help content data 124, according to one embodiment. The self-help content data 124 includes service provider generated content data 202 and user generated content data 204, according to the invention.

The service provider generated content data 202 includes white papers, questions, answers, frequently asked questions, answers to frequently asked questions, tutorials, audio/video content, interactive content, or other content that can be used to assist users in learning about taxes, tax preparation, a tax return preparation system, or other relevant subject matter, according to various embodiments. The service provider generated content data 202 includes definitions content such as, but not limited to, acronym definitions, definitions of tax-specific terms (e.g., tax jargon), and/or definitions of terms that are related to tax law, preparing tax returns, and the tax return preparation system, according to various embodiments. The user generated content data 204 is crowdsourced customer support content and includes questions and responses that are submitted by a community of question askers and response providers that use the customer self-help system 112 or another question and answer customer support system that is associated with one or more service provider services, according to one embodiment. In one embodiment, the user generated content 204 includes the user queries that are entered by a user into the customer self-help system 112. In one embodiment, the user queries are not saved in the self-help content data store 120. In one embodiment, questions that represent better articulated versions of the user query data 152 are stored in the self-help content data store 120.

The pre-processor 122 reads the self-help content data 124 from the self-help content data store 120A, applies one or more content processing algorithms 206 to the self-help content data 124 to identify characteristics of the self-help content data 124 that are used to define and categorize the self-help content components data 126, according to one embodiment. The content processing algorithms 206 include one or more of a natural language processing algorithm 208, a classifier algorithm 210, and a social algorithm 212, according to one embodiment. The pre-processor 122 applies one or more of the content processing algorithms 206 to the self-help content data 124 to identify or generate the self-help content components data 126, which are used to generate the personalized self-help content data 114 that is responsive to the user query data 152, according to one embodiment.

The natural language processing algorithm 208 represents one or more algorithms that use content terms of the self-help content data 124 to identify one or more topics of the self-help content data 124, according to one embodiment. The topics of the self-help content data 124 are representative of the meaning of the self-help content data 124, according to one embodiment. The natural language processing algorithm 208 also uses the content terms of the self-help content data 124 to determine the assertiveness or tone, the platform, the version, the quality, and the likelihood of user satisfaction of the self-help content data 124, according to various embodiments. In one embodiment, the natural language processing algorithm 208 is a probabilistic topic model that is at least partially executed using one or more of Latent Dirichlet Allocation ("LDA") algorithm, a Latent Semantic Indexing ("LSI") algorithm, a query clustering algorithm, and a query deduplication algorithm.

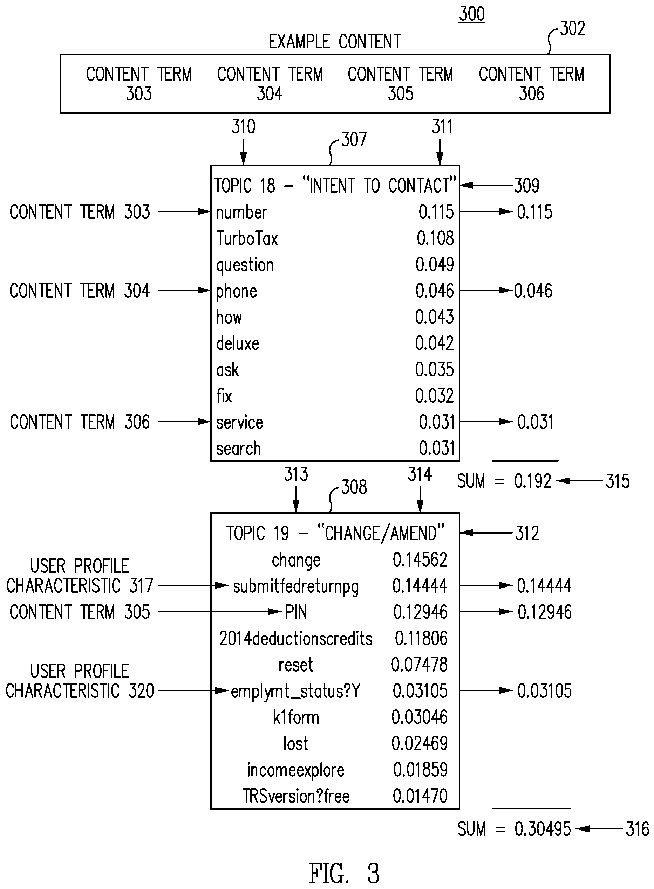

An example of an implementation of a probabilistic topic model that can be executed using a Latent Dirichlet allocation algorithms for the natural language process algorithm 208 is illustrated in the diagram 300 of a probabilistic topic model, which is illustrated in FIG. 3, according to one embodiment. Referring to FIGs. 1, 2, and 3, the diagram 300 shows one technique, based on search terms and user profile characteristics, for determining a relevant topic for content terms in self-help content data 124, according to one embodiment. The diagram 300 includes example content 302, which includes content term 303, content term 304, content term 305, and content term 306, according to one embodiment. Although four example content terms are illustrated, many more s content terms or fewer content terms can also be received and analyzed to identify a relevant topic for the example content 302, according to one embodiment.

The diagram 300 includes two example entries for a topics database (not shown) that can be used to determine a topic that is relevant to the content terms 303, 304, 305, 306, according to one embodiment. The diagram 300 includes a topics database entry 307 and a topics database entry 308, to illustrate an example process of determining a relevant, a more relevant, a highest relevant, or multiple relevant topics for the content terms 303, 304, 305, 306, according to one embodiment. The topics database entry 307 includes a topic 309, topic terms 310, and topic term probabilities 311, according to one embodiment. The topics database entry 308 includes a topic 312, topic terms combined with context characteristics 313, and topic term probabilities combined with context characteristics probabilities 314, according to one embodiment. The topics database entries 307 and 308 are examples of entries that are made to the topics database (not shown), according to one embodiment. The topics 309 and 312 include a numerical identifier (e.g., topic "18" and topic "19") and an alphabetical identifier (e.g., "intent to contact" topic and "change/amend" topic), according to one embodiment.

The topics database entry 308 includes context characteristics of "submitfedreturnpg", "2014deductionscredits", "emplymt_status?Y", "k1form", "incomeexplore", and "TRSversion?free", which represent examples of user profile characteristics, according to one embodiment. For these example context characteristics, "submitfedreturnpg" represents an example of a user experience display identifier for a user experience display page for submitting a federal tax return, "2014deductionscredits" represents an example of a user experience display identifier for a user experience display page for answering questions about deductions and credits for 2014 taxes, "emplymt_status?Y" represents a user characteristic for whether the user is employed, "k1form" represents an example of a user experience display identifier for a user experience display page for filling out a K1 tax form, "incomeexplore" represents an example of a user experience display identifier for a user experience display page for determining income for a user in a tax return preparation system, and "TRSversion?free" represents an identifier of a free version of a tax return preparation system, according to one embodiment.

The customer self-help system 112 determines a topic relevance score 315 for the topic 309 and a topic relevance score 316 for the topic 312 by combining or adding the topic term probabilities and context characteristics probabilities that are associated with one or more of the content terms 303, 304, 305, 306, and the user profile characteristics. The customer self-help system 112 searches the topics database entries 307 and 308 for topic terms that match the content terms 303, 304, 305, 306 and for user profile characteristics that exist during the submission of the content terms 303, 304, 305, 306, according one embodiment. The customer self-help system 112 then associates the topic term probabilities 311, 314 of the topic terms 310, 313 that match the content terms 303, 304, 305, 306 and content context, to associate the relevant topic term probabilities 311, 314, to the content terms 303, 304, 305, 306, according one embodiment. For each topic 309 and 312, the customer self-help system 112 determines the topic relevance scores 315, 316, by combining the topic term probabilities 311, 314 that are relevant to and associated with the content terms 303, 304, 305, 306 and user profile characteristics.

As a specific and illustrative example, if the content term 303 is the topic term "number", the content term 304 is the topic term "phone", the content term 305 is the topic term "PIN", the content term 306 is the search query term "service", the user profile characteristic 317 includes "submitfedreturnpg", and the user profile characteristic 320 includes "emplymt_status?Y", then the topic relevance score 315 for the topic 309 is 0.192, and the topic relevance score 316 for the topic 312 is .12946, without taking context characteristics into account. If context characteristics are factored into the topic relevance score 316 for the topic 312, then the topic relevance score 316 for the topic 312 increases to .30295. Accordingly, the topic relevance score 316 for the topic 312 makes the topic 312 - "change/amend" more relevant to the content terms 303, 304, 305, 306 than the topic 309 - "intent to contact", because the topic relevance score 316 is greater than the topic relevance score 315, according to one example of an embodiment.

The natural language process algorithm 208, the content processing algorithms 206, the pre-processor 122, or the pre-process sub-system 116 determines more relevant, most relevant, or highest relevant topics for the content terms by ranking, sorting, and/or comparing the topic relevance scores 315, 316 for each of the topics 309, 312, according to one embodiment. The customer self-help system 112 determines that the topic with the highest topic relevance score is the highest relevant topic to the content terms 303, 304, 305, 306, according one embodiment.

Returning to FIG. 2 and the process 200, the content processing algorithms 206 include the classifier algorithm 210 for optionally identifying the characteristics of the self-help content data 124 and the self-help content components data 126, according to one embodiment. The classifier algorithm 210 receives the self-help content data 124 (in addition to any user profile information stored with the self-help content data 124) as an input, and the classifier algorithm 210 outputs likelihoods of characteristics of the self-help content data 124, according to one embodiment. The classifier algorithm 210 is a predictive model that is defined by applying one or more classifier algorithms to existing self-help content that has already been associated with one or more particular characteristics, according to one embodiment. By applying one or more classifier algorithms to the existing self-help content, a predictive model can be defined and enabled to identify similarities between the self-help content data 124 and the existing self-help content from which the predictive model is defined, according to one embodiment. Classifier algorithms include, but are not limited to, regression, logistic regression, decision trees, artificial neural networks, support vector machines, linear regression, nearest neighbor methods, distance based methods, naive Bayes, linear discriminant analysis, k-nearest neighbor algorithm, and any other know or later developed classifier algorithm, according to various embodiments.

After one or more of the natural language processing algorithm 208 and the classifier algorithm 210 characterize the self-help content data 124, by which the self-help content data 124 is categorized into one or more self-help content components data 126, the pre-process sub-system 116 selectively makes the characterizations public to users of the customer self-help system 112, according to one embodiment. By publicizing the characterizations to the users of the customer self-help system 112, the pre-process sub-system 116 enables crowdsourcing the correction of characterizations made by one or more of the natural language processing algorithm 208 and the classifier algorithm 210, according to one embodiment. The social algorithm 212 quantifies the responses received from the users of the customer self-help system 112 and accepts or rejects the characterization or classifications that are determined by one or more of the natural language processing algorithm 208 and the classifier algorithm 210, according to one embodiment.

The self-help content data store 120B includes the self-help content components data 126 that have been characterized or classified by one or more of the content processing algorithms 206, according to one embodiment. The self-help content components data 126 represent characterization, and categorization of the self-help content data 124, according to one embodiment. The self-help content components data 126 include media content data 214, universal content data 216, and user specific content data 218, according to one embodiment. The media content data 214 includes audio files, video files, and other multimedia files, according to one embodiment. The universal content data 216 represents content that is been identified (e.g., based on topic) as being agnostic to one or more product versions, computing system platforms, and user personality types, according to one embodiment. The user specific content data 218 represents classification of portions of the self-help content data 124, which enables personalized matching of portions of the self-help content data 124 to particular users based on the user query data 152 and the user profile data 132, according to one embodiment. The user specific content data 218 includes content ID data 220, contents topics data 222, content details data 224, content terms data 226, content tone data 228, semantic specific content data 230, version specific content data 232, platform specific content data 234, user characteristics specific content data 236, and other non-universal content data 238, according to various embodiments.

The self-help content components data 126 are categorized into self-help content data store 120B by characteristics and sub-characteristics, according to one embodiment. For example, the self-help content data store 120B includes tables or other data structures with columns that identify characteristics of each of the self-help content components data 126, according to one embodiment. The characteristics include, but are not limited to, type of media (e.g., video, audio, text), whether the content is applicable to all users, whether the content is applicable to specific users, the assertiveness of the content, the tone of the content, the likelihood that users are going to find the content to be satisfying, the conciseness of the content, and the relevance of the content to a particular computing system or to particular type of user, according to various embodiments.

The content ID data 220 is a characteristic of the user specific content data 218 that is used to identify an entry in the self-help content data store 120B, according to one embodiment.

The content topics data 222 represent one or more topics that the content processing algorithms 206 have identified with a particular entry in the self-help content data store 120B, according to one embodiment.

Content details data 224 represent the description of an answer, frequently asked questions ("FAQs"), other service provider generated content, or other user generated content, according to one embodiment.

The content terms data 226 represent the individual words that are analyzed by one or more of the content processing algorithms 206 to determine the content topics data 222, according to one embodiment.

The content tone data 228 represents a level of assertiveness of the content details data 224, as determined by one or more of the content processing algorithms 206, and which may affect the likelihood of the user being satisfied with a particular entry in the self-help content data store 120B, according to one embodiment.

The semantic specific content data 230 represents characteristics of the content details data 224 that are related to quality such as the sophistication, clarity, and likely completeness of the content details data 224, according to one embodiment.

The version specific content data 232 represents identification of a particular version of a service provider product that is referenced in the content details data 224 or in the contents topics data 222, according to one embodiment.

The platform specific content data 234 represents identification of a particular platform to which the content details data 224 are directed, according to one embodiment. For example, if a user generated content is specifically directed to navigating a Mac OS (e.g., OS X), a Mac browser (e.g., Safari), or other Apple product, the content details data 224 or content terms data 226 within the content details data 224 are identified as being relevant to Mac users, according to one embodiment.

The user characteristics specific content data 236 represents identification of user characteristics that include characteristics such as those described above in association with the user profile data 132, according to one embodiment.

The other non-universal content data 238 represents one or more additional characteristics of the self-help content data 124 by which the self-help content components data 126 are classified or categorize within the self-help content data store 120B, according to various embodiments.

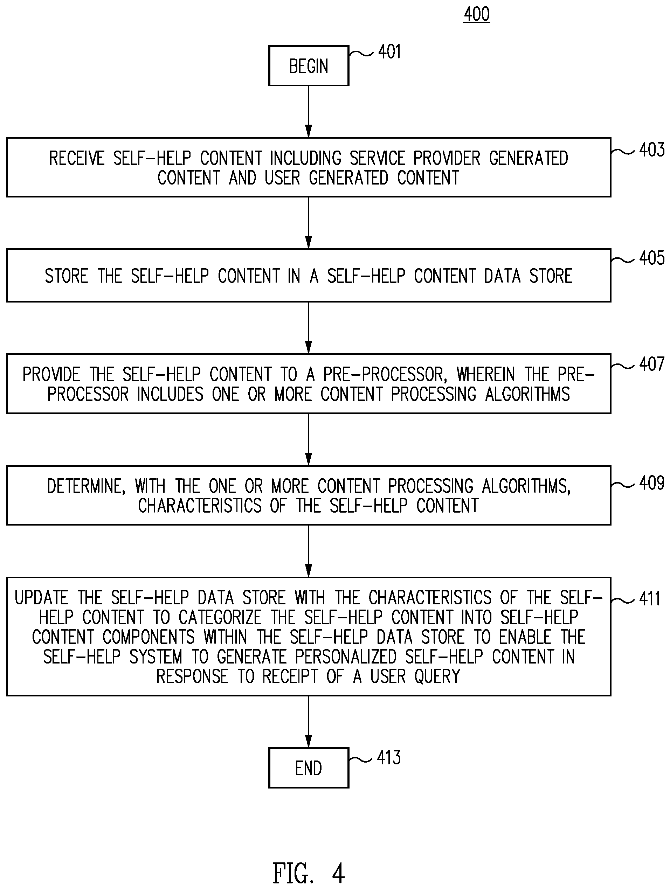

FIG. 4 illustrates a flow diagram of a process 400 for characterizing self-help content into self-help content components and updating the self-help content data store with the self-help content components, according to one embodiment. The process 400 includes references to FIGs. 1, 2, and 3, according to one embodiment.

In one embodiment, at BEGIN 401, the process 400 begins.

In one embodiment, at RECEIVE SELF-HELP CONTENT INCLUDING SERVICE PROVIDER GENERATED CONTENT AND USER GENERATED CONTENT 403, the process 400 receives the self-help content data 124 including the service provider generated content data 202 and the user generated content data 204, according to one embodiment.

In one embodiment, at STORE THE SELF-HELP CONTENT IN A SELF-HELP CONTENT DATA STORE 405, the process 400 stores the self-help content data 124 in the self-help content data store 120, according to one embodiment. The self-help content data store is a database or other data structure that includes one or more tables or related data structures for storing and organizing the self-help content data 124, according to one embodiment.

In one embodiment, at PROVIDE THE SELF-HELP CONTENT TO A PRE-PROCESSOR, WHEREIN THE PRE-PROCESSOR INCLUDES ONE OR MORE CONTENT PROCESSING ALGORITHMS 407, the process 400 provides the self-help content data 124 to the pre-processor 122, wherein the pre-processor 122 includes one or more content processing algorithms 206. The one or more content processing algorithms 206 include, but are not limited to, the natural language process algorithm 208, the classifier algorithm 210, and the social algorithm 212, according to one embodiment.

In one embodiment, at DETERMINE, WITH THE ONE OR MORE CONTENT PROCESSING ALGORITHMS, CHARACTERISTICS OF THE SELF-HELP CONTENT 409, the process 400 determines, with the one or more content processing algorithms 206, characteristics of the self-help content data 124. Examples of characteristics of the self-help content data 124 include, but are not limited to, the type of media, whether the content is universally applicable to users, content topic, content details, content terms, content tone, whether the content is version specific, whether the content is platform specific, user characteristics of the content, semantic specific and characteristics of the content, according to one embodiment.

In one embodiment, at UPDATE THE SELF-HELP DATA STORE WITH THE CHARACTERISTICS OF THE SELF-HELP CONTENT TO CATEGORIZE THE SELF-HELP CONTENT INTO SELF-HELP CONTENT COMPONENTS WITHIN THE SELF-HELP DATA STORE, TO ENABLE THE SELF-HELP SYSTEM TO GENERATE PERSONALIZED SELF-HELP CONTENT IN RESPONSE TO RECEIPT OF A USER QUERY 411, the process 400 updates the self-help content data store 120 with the characteristics of the self-help content data 124 to categorize the self-help content data 124 into self-help content components data 126 within the self-help content data store 120, to enable the customer self-help system 112 to generate personalized self-help content data 114 in response to receipt of a user query data 152. In one embodiment, updating the self-help data store includes adding additional columns to tables in the self-help content data store for each characteristic that is identified or can be identified by any of the content processing algorithms 206, according to one embodiment. By adding additional columns to tables or other data structures in the self-help content data store, the characteristics of the self-help content data 124 becomes searchable by the composer 130, according to one embodiment.

In one embodiment, at END 413, the process 400 terminates.

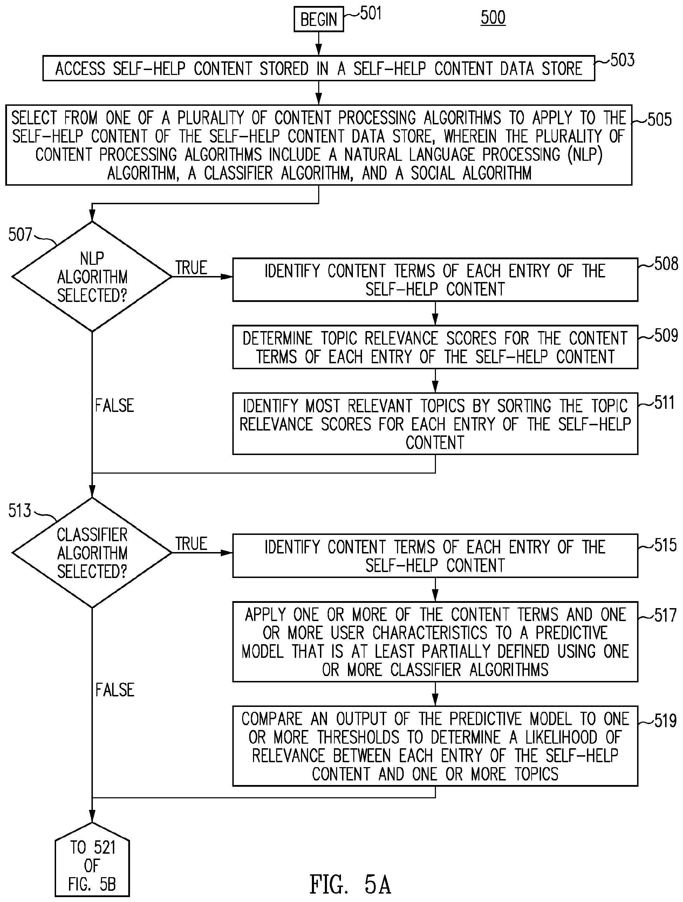

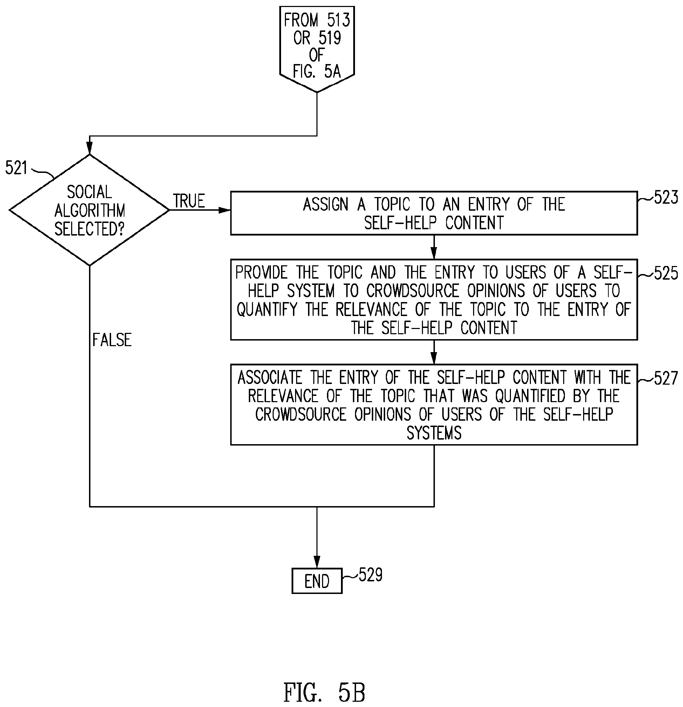

FIGs. 5A and 5B illustrates a process 500 of analyzing self-help content to identify self-help components within the self-help content, according to one embodiment. The following discussion of FIGs. 5A and 5B includes reference to FIGs. 1, 2, and 3.

In one embodiment, at BEGIN 501, the process 500 begins, according to one embodiment.

In one embodiment, at ACCESS SELF-HELP CONTENT STORED IN A SELF-HELP CONTENT DATA STORE 503, the process 500 accesses the self-help content data 124 stored in the self-help content data store 120.

In one embodiment, at SELECT FROM ONE OF A PLURALITY OF CONTENT PROCESSING ALGORITHMS TO APPLY TO THE SELF-HELP CONTENT OF THE SELF-HELP CONTENT DATA STORE, WHEREIN THE PLURALITY OF CONTENT PROCESSING ALGORITHMS INCLUDE A NATURAL LANGUAGE PROCESSING (NLP) ALGORITHM, A CLASSIFIER ALGORITHM, AND A SOCIAL ALGORITHM 505, the process 500 selects from one of a plurality of the content processing algorithms 206 to apply to the self-help content data 124 of the self-help content data store 120, wherein the plurality of content processing algorithms 206 include a natural language processing algorithm 208, a classifier algorithm 210, and a social algorithm 212.

In one embodiment, at NLP ALGORITHM SELECTED? 507, the process 500 determines if the natural language process algorithm 208 is selected by the pre-processor 122 for application to the self-help content data 124. If NLP ALGORITHM SELECTED? 507 is true, NLP ALGORITHM SELECTED? 507 proceeds to IDENTIFY CONTENT TERMS OF EACH ENTRY OF THE SELF-HELP CONTENT 508, according to one embodiment. If NLP ALGORITHM SELECTED? 507 is false, NLP ALGORITHM SELECTED? 507 proceeds to CLASSIFIER ALGORITHM SELECTED? 513, according to one embodiment.

In one embodiment, at IDENTIFY CONTENT TERMS OF EACH ENTRY OF THE SELF-HELP CONTENT 508, the process 500 identifies content terms of each entry of the self-help content data 124.

In one embodiment, at DETERMINE TOPIC RELEVANCE SCORES FOR THE CONTENT TERMS OF EACH ENTRY OF THE SELF-HELP CONTENT 509, the process 500 determines topic relevance scores for the content terms of each entry of the self-help content data 124.

In one embodiment, at IDENTIFY MOST RELEVANT TOPICS BY SORTING THE TOPIC RELEVANCE SCORES FOR EACH ENTRY OF THE SELF-HELP CONTENT 511, the process 500 identifies the most relevant topics by sorting the topic relevance scores for each entry of the self-help content data 124.

In one embodiment, at CLASSIFIER ALGORITHM SELECTED? 513, the process 500 determines if the classifier algorithm 210 is selected for execution. If CLASSIFIER ALGORITHM SELECTED? 513 is true, CLASSIFIER ALGORITHM SELECTED? 513 proceeds to IDENTIFY CONTENT TERMS OF EACH ENTRY OF THE SELF-HELP CONTENT 515, according to one embodiment. If CLASSIFIER ALGORITHM SELECTED? 513 is false, CLASSIFIER ALGORITHM SELECTED? 513 proceeds to SOCIAL ALGORITHM SELECTED? 521 (shown on FIGURE 5 B), according to one embodiment.

In one embodiment, at IDENTIFY CONTENT TERMS OF EACH ENTRY OF THE SELF-HELP CONTENT 515, the process 500 identifies content terms of each entry of the self-help content.

In one embodiment, at APPLY ONE OR MORE OF THE CONTENT TERMS AND ONE OR MORE USER CHARACTERISTICS TO A PREDICTIVE MODEL THAT IS AT LEAST PARTIALLY DEFINED USING ONE OR MORE CLASSIFIER ALGORITHMS 517, the process 500 applies one or more of the content terms and user profile data 132 to a predictive model that is at least partially defined using one or more classifier algorithms 210.

In one embodiment, at COMPARE AN OUTPUT OF THE PREDICTIVE MODEL TO ONE OR MORE THRESHOLDS TO DETERMINE A LIKELIHOOD OF RELEVANCE BETWEEN EACH ENTRY OF THE SELF-HELP CONTENT AND ONE OR MORE TOPICS 519, the process 500 compares an output of the predictive model to one or more thresholds to determine a likelihood of relevance between each entry of the self-help content data 124 and one or more topics.

Referring now to FIG. 5B, in one embodiment, at SOCIAL ALGORITHM SELECTED? 521, the process 500 determines whether a social algorithm 212 has been selected. If SOCIAL ALGORITHM SELECTED? 521 is true, SOCIAL ALGORITHM SELECTED? 521 proceeds to ASSIGN A TOPIC TO AN ENTRY OF THE SELF-HELP CONTENT 523, according to one embodiment. If SOCIAL ALGORITHM SELECTED? 521 is false, SOCIAL ALGORITHM SELECTED? 521 proceeds to END 529, according to one embodiment.

In one embodiment, at ASSIGN A TOPIC TO AN ENTRY OF THE SELF-HELP CONTENT 523, the process 500 assigns a topic to an entry of the self-help content data 124.

In one embodiment, at PROVIDE THE TOPIC AND THE ENTRY TO USERS OF A SELF-HELP SYSTEM TO CROWDSOURCE OPINIONS OF USERS TO QUANTIFY THE RELEVANCE OF THE TOPIC TO THE ENTRY OF THE SELF-HELP CONTENT 525, the process 500 provides a topic and the entry to users of customer self-help system 112 to crowdsource opinions of users to quantify the relevance of the topic to the entry of the self-help content data 124.

In one embodiment, at ASSOCIATE THE ENTRY OF THE SELF-HELP CONTENT WITH THE RELEVANCE OF THE TOPIC THAT WAS QUANTIFIED BY THE CROWDSOURCE OPINIONS OF USERS OF THE SELF-HELP SYSTEM 527, the process 500 associates the entry of the self-help content data 124 with the relevance of the topic that was quantified by the crowdsource opinions of users of the customer self-help system 112. In one embodiment, users of the customer self-help system 112 quantify relevance of the topic by providing an 'up vote' or 'down vote', a 'thumbs up' or 'thumbs down', an 'agree' or a 'disagree' response, or providing optional text feedback after voting content up or down. In one embodiment, users who vote content up or down are provided with an option (e.g., a text box) to explain their reasons for their vote.

In one embodiment, at END 529, the process 500 ends.

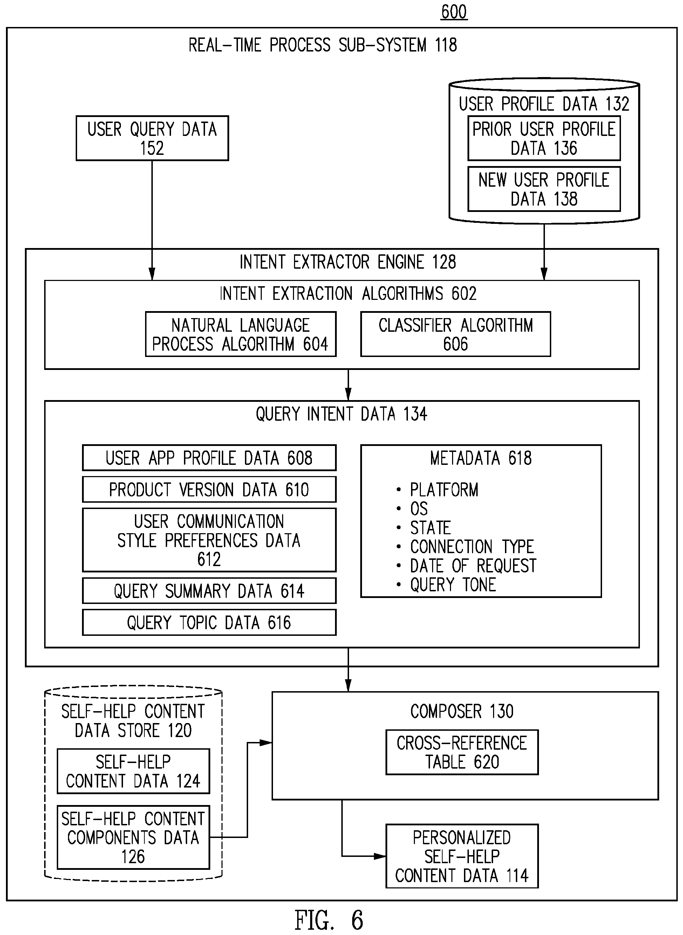

FIG. 6 illustrates a process 600 for generating personalized self-help content at least partially based on the user query, user profile data, and self-help content components, according to one embodiment.

Referring to FIGs. 1 and 6, the real-time process sub-system 118 uses the intent extractor engine 128 to generate the personalized self-help content data 114, at least partially based on the user query data 152 and the user profile data 132, according to one embodiment. The intent extractor engine 128 includes one or more intent extraction algorithms 602 for analyzing the user query data 152 and the user profile data 132, according to one embodiment. The intent extraction algorithms 602 include a natural language process algorithm 604 and a classifier algorithm 606, according to one embodiment.

The natural language processing algorithm 604 applies one or more natural language processing techniques to the user query data 152 and the user profile data 132 to determine the query intent data 134 of the user query data 152, according to one embodiment. The natural language processing algorithm 604 includes a probabilistic topic model that determines one or more topics that are relevant to the user query data 152, according to one embodiment. The probabilistic topic model is defined using a Latent Dirichlet allocation algorithm, according to one embodiment. The natural language process algorithm operates similar to the natural language process algorithm 208 (shown in FIG. 2) that is described in the process 200 above, according to one embodiment. In one embodiment, the customer self-help system 112 uses either the natural language process algorithm 208 or the natural language process algorithm 208 in both process 200 and process 600.

The classifier algorithm 606 includes one or more predictive models that are generated by applying one or more predictive model techniques to existing data, according to one embodiment. The classifier algorithm 606 is similar to the classifier algorithm 210 (shown in FIG. 2) that is described in the process 200 above, according to one embodiment. In one embodiment, the customer self-help system 112 uses either the classifier algorithm 210 or the classifier algorithm 606 in both process 200 and process 600.

By applying the user query data 152 and the user profile data 132 to one or more of the intent extraction algorithms 602, the intent extractor engine 128 generates the query intent data 134, according to one embodiment. The query intent data 134 includes one or more of user app profile data 608, product version data 610, user communication style preferences data 612, a query summary data 614, a query topic data 616, and metadata 618, according to various embodiments. The user app profile data 608 includes information representing the frequency with which a user uses the customer self-help system 112, the user's credentials, and the user's role (e.g., question asking user or question answering user) within the customer self-help system 112, according to one embodiment. The product version data 610 includes information representing a mobile, online, or desktop version of service provider product (e.g., tax return preparation system) that the user is seeking assistance with, according to one embodiment. The user communication style preferences data 612 include data representing whether a user prefers lengthy explanations or brief/concise explanations to user queries, according to one embodiment. The user communication style preferences data 612 are determined at least partially by clickstream data (e.g., up votes and down votes) for a user that is stored in the user profile data 132 for a user, according to one embodiment. The query summary data 614 includes data representing a title of the user query data 152, according to one embodiment. The query topic data 616 includes data representing one or more topics that are representative of the user query data 152, according to one embodiment.

The metadata 618 includes data representing user profile data 132 and other information that is related to the user query data 152, according to one embodiment. The metadata 618 includes, but is not limited to, the platform of the client computing environment 150, the operating system of the client computing environment 150, the state from which the user submits the user query data 152, a content connection type (e.g., Wi-Fi, LTE, satellite, other cellular or telecommunications standards) from which of the communication channel 104 and by which the client computing environment 150 communicates with the customer self-help system 112, a date of request (e.g., during tax season), and a query tone (assertive, passive), according to various embodiments.

The intent extractor engine 128 provides the query intent data 134 to the composer 130, to enable the composer 130 to generate the personalized self-help content 144, according to one embodiment. The composer 130 receives the query intent data 134 and pulls the self-help content components data 126 from the self-help content data store 120 to populate or generate the personalized self-help content data 114, which is responsive to the user query data 152, according to one embodiment. The composer 130 matches characteristics of the query intent data 134 with characteristics of the self-help content components data 126 to determine which portions of the self-help content components data 126 to use to generate the personalized self-help content 144, according to one embodiment.

In one embodiment, the composer 130 uses a cross-reference table 620 to match up the characteristics of the query intent data 134 or user query data 152 with characteristics of the self-help content components data 126, according to one embodiment. The cross-reference table 620 include rows and columns that correlate the characteristics of the user of the query intent data 134 with the characteristics of the self-help content components 126, according to one embodiment. By correlating the characteristics of the query intent data 134 with the characteristics of the self-help content components data 126, the composer 130 identifies the relevant portions of the self-help content data store 120 that are relevant to the user query data 152, in the context of the user profile data 132, according to one embodiment. In one embodiment, the characteristics of the user query data 152 that are identified by the intent extractor engine 128 are the same as the characteristics of the self-help content data 124 that are identified by the pre-processor 122, to facilitate matching the query intent data 134 with the self-help content components data 126. By identifying and selecting relevant portions of the self-help content data store 120, the composer 130 or the intent extractor engine 128 are able to personalize and improve responses that are provided in response to the user query data 152, according to one embodiment.

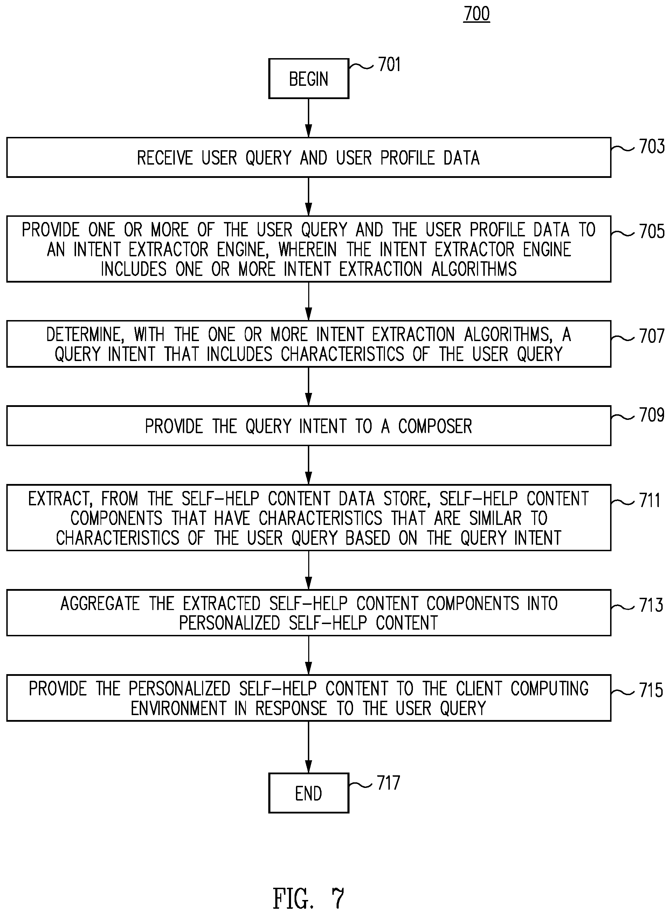

FIG. 7 illustrates a process 700 of generating personalized self-help content with artificial intelligence in a customer self-help system, according to one embodiment. The discussion of process 700 references FIGs. 1, 2, and 6.

In one embodiment, at BEGIN 701, the process 700 begins.

In one embodiment, at RECEIVE USER QUERY AND USER PROFILE DATA 703, the process 700 receives the user query data 152 and the user profile data 132.

In one embodiment, at PROVIDE ONE OR MORE OF THE USER QUERY AND THE USER PROFILE DATA TO AN INTENT EXTRACTOR ENGINE, WHEREIN THE INTENT EXTRACTOR ENGINE INCLUDES ONE OR INTENT EXTRACTION ALGORITHMS 705, process 700 applies the user query data 152 and the user profile data 132 to the intent extractor engine 128, wherein the intent extractor engine 128 includes one or more intent extraction algorithms 602. The one or more intent extraction algorithms 602 include the natural language process algorithm 604 and the classifier algorithm 606, according to one embodiment.

In one embodiment, at DETERMINE, WITH THE ONE OR MORE INTENT EXTRACTION ALGORITHMS, A QUERY INTENT THAT INCLUDES CHARACTERISTICS OF THE USER QUERY 707, process 700 determines, with one or more intent extraction algorithms 602, the query intent data 134 that includes characteristics of the user query data 152.

In one embodiment, at PROVIDE THE QUERY INTENT TO A COMPOSER 709, process 700 provides the query intent data 134 to the composer 130.

In one embodiment, at EXTRACT, FROM THE SELF-HELP CONTENT DATA STORE, SELF-HELP CONTENT COMPONENTS THAT HAVE CHARACTERISTICS THAT ARE SIMILAR TO CHARACTERISTICS OF THE USER QUERY BASED ON THE QUERY INTENT 711, process 700 extracts, from the self-help content data store 120, self-help content components data 126 that have characteristics that are similar to characteristics of the user query data 152 based on the query intent data 134.

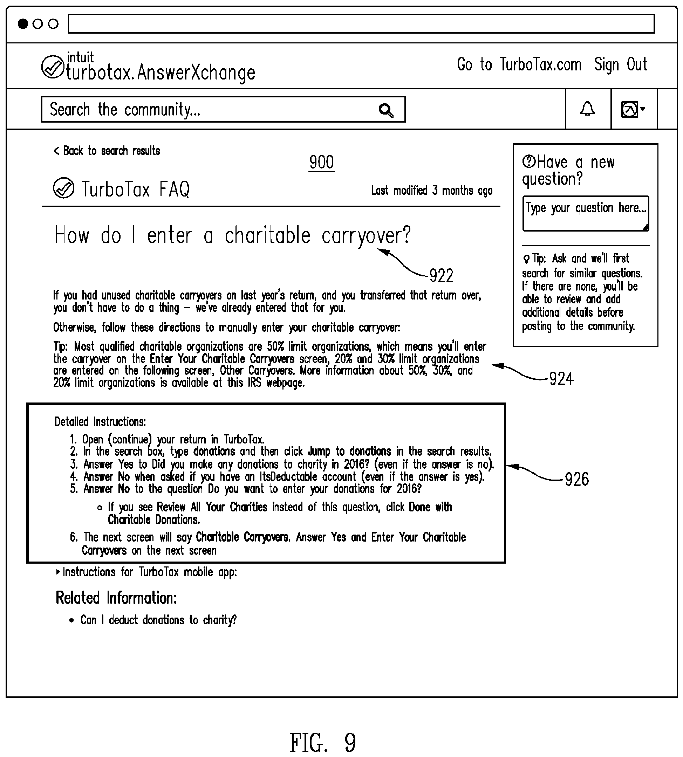

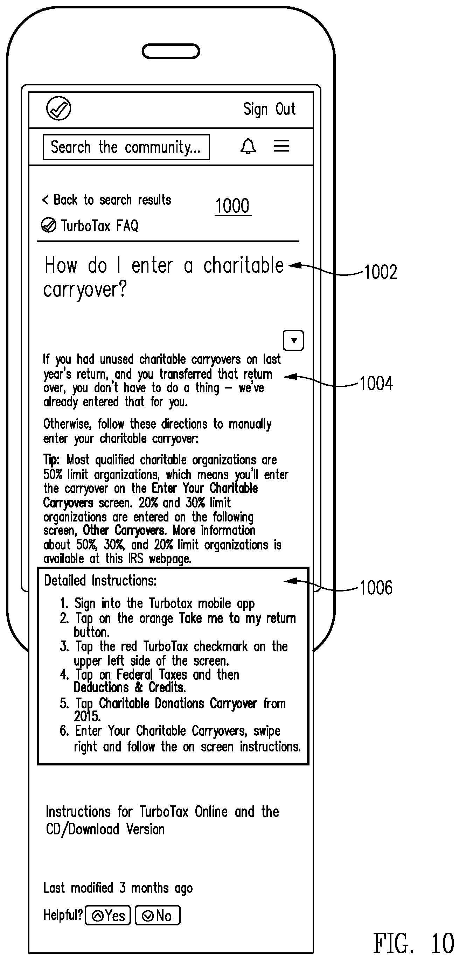

In one embodiment, at AGGREGATE THE EXTRACTED SELF-HELP CONTENT COMPONENTS INTO PERSONALIZED SELF-HELP CONTENT 713, process 700 aggregates the extracted self-help content components data 126 into the personalized self-help content data 114. Example embodiments of the personalized self-help content data 114 are illustrated in FIGs. 9 and 10.

In one embodiment, at PROVIDE THE PERSONALIZED SELF-HELP CONTENT TO THE CLIENT COMPUTING ENVIRONMENT IN RESPONSE TO THE USER QUERY 715, process 700 provides the personalized self-help content data 114 to the client computing environment 150 in response to the user query data 152.

In one embodiment, at END 717, process 700 ends.

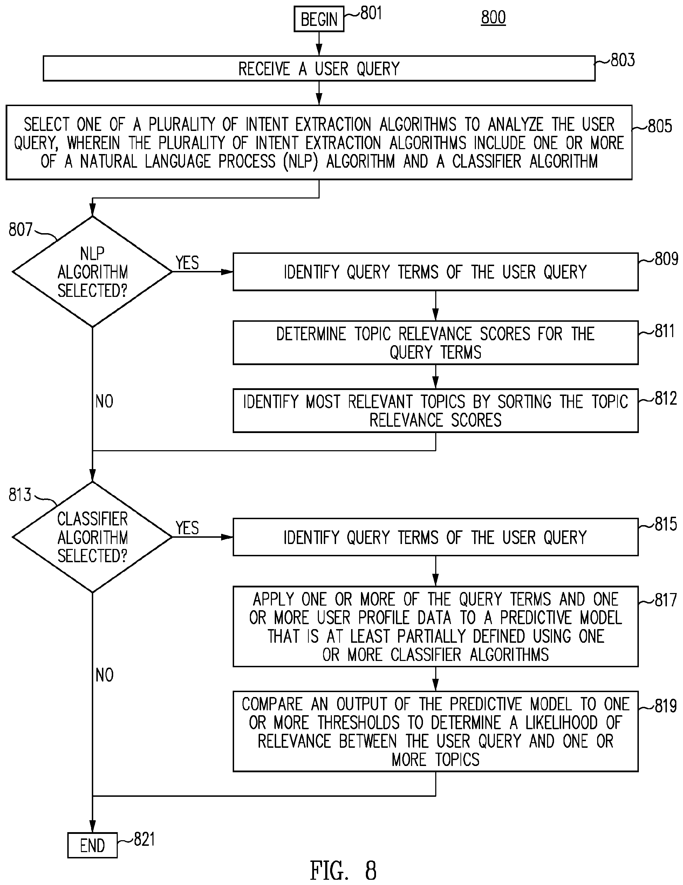

FIG. 8 illustrates a process 800 of generating personalized self-help content with artificial intelligence in a customer self-help system, according to one embodiment.

In one embodiment, at BEGIN 801, the process 800 begins.

In one embodiment, at RECEIVE A USER QUERY 803, the process 800 receives the user query data 152. The process also receives the user profile data 132, according to one embodiment.

In one embodiment, at SELECT ONE OF A PLURALITY OF INTENT EXTRACTION ALGORITHMS TO ANALYZE THE USER QUERY, WHEREIN THE PLURALITY OF INTENT EXTRACTION ALGORITHMS INCLUDE ONE OR MORE OF A NATURAL LANGUAGE PROCESS (NLP) ALGORITHM AND A CLASSIFIER ALGORITHM 805, the process 800 selects one of the plurality of intent extraction algorithms 602 to analyze the user query data 152, wherein the plurality of intent extraction algorithms 602 include one or more of a natural language process algorithm 604 and a classifier algorithm 606.

In one embodiment, at NLP ALGORITHM SELECTED? 807, the process 800 determines if NLP ALGORITHM SELECTED? 807 is true. If NLP ALGORITHM SELECTED? 807 is true, NLP ALGORITHM SELECTED? 807 proceeds to IDENTIFY QUERY TERMS OF THE USER QUERY 809, according to one embodiment. If NLP ALGORITHM SELECTED? 807 is false, NLP ALGORITHM SELECTED? 807 proceeds to CLASSIFIER ALGORITHM SELECTED? 813, according to one embodiment.

In one embodiment, at IDENTIFY QUERY TERMS OF THE USER QUERY 809, the process 800 identifies query terms of the user query data 152.

In one embodiment, at DETERMINE TOPIC RELEVANCE SCORES FOR THE QUERY TERMS 811, the process 800 determines a topic relevance scores for the query terms. An example of techniques that can be used to determine topic relevance scores are illustrated in FIG. 3 and are described in the corresponding description above.

In one embodiment, at IDENTIFY MOST RELEVANT TOPICS BY SORTING THE TOPIC RELEVANCE SCORES 812, the process 800 identifies relevant or most relevant topics by sorting the topic relevance scores.

In one embodiment, at CLASSIFIER ALGORITHM SELECTED? 813, the process 800 determines if the classifier algorithm 606 has been selected. If CLASSIFIER ALGORITHM SELECTED? 813 is true, CLASSIFIER ALGORITHM SELECTED? 813 proceeds to IDENTIFY QUERY TERMS OF THE USER QUERY 815, according to one embodiment. If CLASSIFIER ALGORITHM SELECTED? 813 is false, CLASSIFIER ALGORITHM SELECTED? 813 proceeds to END 821, according to one embodiment.

In one embodiment, at IDENTIFY QUERY TERMS OF THE USER QUERY 815, the process 800 identifies query terms of the user query data 152.

In one embodiment, at APPLY ONE OR MORE OF THE QUERY TERMS AND ONE OR MORE USER PROFILE DATA TO A PREDICTIVE MODEL THAT IS AT LEAST PARTIALLY DEFINED USING ONE OR MORE CLASSIFIER ALGORITHMS 817, the process 800 applies one or more of the query terms and one or more user profile data 132 to a predictive model that is at least partially defined using one or more classifier algorithms 606.

In one embodiment, at COMPARE AN OUTPUT OF THE PREDICTIVE MODEL TO ONE OR MORE THRESHOLDS TO DETERMINE A LIKELIHOOD OF RELEVANCE BETWEEN THE USER QUERY AND ONE OR MORE TOPICS 819, the process 800 compares an output of the predictive model to one or more thresholds to determine a likelihood of relevance between the user query data 152 and one or more topics.

In one embodiment, at END 821, the process 800 ends.

FIG. 9 is a data block diagram of an example of personalized self-help content 900, according to one embodiment. The personalized self-help content 900 includes a user query 922, universal content 924, and user specific content 926, according to one embodiment. The user query 922 is a specific illustrative example of the user query data 152 (shown in FIG. 1). The universal content 924 is a specific illustrative example of the universal content data 216 (shown in FIG. 2), which is relevant to the user query 922 but which is generic to the platform or operating system of the client computing environment of the user, according to one embodiment. The user specific content 926 is a specific illustrative example of the user specific content data 218 (shown in FIG. 2), according to one embodiment.

The user specific content 926 includes instructions to "click" on "jump to donations", which indicates that the platform of the client computing environment 150 has been identified as a desktop or laptop computer where clicking a mouse is likely how a user is interacting with the user experience, according to one embodiment.

FIG. 10 is a data block diagram of an example of personalized self-help content 1000, according to one embodiment. The personalized self-help content 1000 includes a user query 1002, universal content 1004, and user specific content 1006, according to one embodiment. The user query 1002 is a specific illustrative example of the user query data 152 (shown in FIG. 1). The universal content 1004 is a specific illustrative example of the universal content data 216 (shown in FIG. 2), which is relevant to the user query 1002 but which is generic to the platform or operating system of the client computing environment of the user, according to one embodiment. The user specific content 1006 is a specific illustrative example of the user specific content data 218 (shown in FIG. 2), according to one embodiment.

The user specific content 1006 includes instructions to "tap" on "take me to my return", which indicates that the platform of the client computing environment 150 has been identified as a mobile device or a touch screen-based device where tapping a screen is likely how a user is interacting with the user experience, according to one embodiment.

As discussed in more detail above, using the above embodiments, with little or no modification and/or input, there is considerable flexibility, adaptability, and opportunity for customization to meet the specific needs of various parties under numerous circumstances.

In the discussion above, certain aspects of one embodiment include process steps and/or operations and/or instructions described herein for illustrative purposes in a particular order and/or grouping. However, the particular order and/or grouping shown and discussed herein are illustrative only and not limiting. Those of skill in the art will recognize that other orders and/or grouping of the process steps and/or operations and/or instructions are possible and, in some embodiments, one or more of the process steps and/or operations and/or instructions discussed above can be combined and/or deleted. In addition, portions of one or more of the process steps and/or operations and/or instructions can be re-grouped as portions of one or more other of the process steps and/or operations and/or instructions discussed herein. Consequently, the particular order and/or grouping of the process steps and/or operations and/or instructions discussed herein do not limit the scope of the invention as claimed below.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in hardware elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Some portions of the above description present the features of the present invention in terms of algorithms and symbolic representations of operations, or algorithm-like representations, of operations on information/data. These algorithmic and/or algorithm-like descriptions and representations are the means used by those of skill in the art to most effectively and efficiently convey the substance of their work to others of skill in the art. These operations, while described functionally or logically, are understood to be implemented by computer programs and/or computing systems. Furthermore, it has also proven convenient at times to refer to these arrangements of operations as steps or modules or by functional names, without loss of generality.

Unless specifically stated otherwise, as would be apparent from the above discussion, it is appreciated that throughout the above description, discussions utilizing terms such as, but not limited to, "activating," "accessing," "adding," "aggregating," "alerting," "applying," "analyzing," "associating," "calculating," "capturing," "categorizing," "classifying," "comparing," "creating," "defining," "detecting," "determining," "distributing," "eliminating," "encrypting," "extracting," "filtering," "forwarding," "generating," "identifying," "implementing," "informing," "monitoring," "obtaining," "posting," "processing," "providing," "receiving," "requesting," "saving," "sending," "storing," "substituting," "transferring," "transforming," "transmitting," "using," etc., refer to the action and process of a computing system or similar electronic device that manipulates and operates on data represented as physical (electronic) quantities within the computing system memories, resisters, caches or other information storage, transmission or display devices.

The present invention also relates to an apparatus or system for performing the operations described herein. This apparatus or system may be specifically constructed for the required purposes, or the apparatus or system can comprise a general purpose system selectively activated or configured/reconfigured by a computer program stored on a computer program product as discussed herein that can be accessed by a computing system or other device.

Those of skill in the art will readily recognize that the algorithms and operations presented herein are not inherently related to any particular computing system, computer architecture, computer or industry standard, or any other specific apparatus. Various general purpose systems may also be used with programs in accordance with the teaching herein, or it may prove more convenient/efficient to construct more specialized apparatuses to perform the required operations described herein. The required structure for a variety of these systems will be apparent to those of skill in the art. In addition, the present invention is not described with reference to any particular programming language and it is appreciated that a variety of programming languages may be used to implement the teachings of the present invention as described herein, and any references to a specific language or languages are provided for illustrative purposes only and for enablement of the contemplated best mode of the invention at the time of filing.

The present invention is well suited to a wide variety of computer network systems operating over numerous topologies. Within this field, the configuration and management of large networks comprise storage devices and computers that are communicatively coupled to similar and/or dissimilar computers and storage devices over a private network, a LAN, a WAN, a private network, or a public network, such as the Internet.

It should also be noted that the language used in the specification has been principally selected for readability, clarity and instructional purposes, and may not have been selected to delineate or circumscribe the inventive subject matter. Accordingly, the disclosure of the present invention is intended to be illustrative, but not limiting, of the scope of the invention, which is set forth in the claims below.

In addition, the operations shown in the figures, or as discussed herein, are identified using a particular nomenclature for ease of description and understanding, but other nomenclature is often used in the art to identify equivalent operations.

## Claims

1. A customer self-help system, comprising:
at least one processor;
at least one communication channel coupled to the at least one processor; and
at least one memory coupled to the at least one processor, the at least one memory having stored therein instructions which when executed by any set of the at least one processor, perform a process for generating personalized self-help content that is responsive to a user query, the process including:
storing (405) self-help content data in a self-help content data store, wherein the self-help content data comprise service provider generated content data and user generated content data;
determining (409) self-help content characteristics representing a plurality of characteristics of the self-help content data stored in the self-help content data store using one or more content processing algorithms;
modifying (411) the self-help content data store to include the characteristics of the self-help content to categorize the self-help content data into self-help content components;
receiving, with a customer self-help system, user query data representing a user query having a plurality of query terms;
applying one or more intent extraction algorithms to the user query data to generate query intent data representing a query intent for the user query, wherein the query intent data includes user query characteristics data representing a plurality of characteristics of the user query;
identifying relevant portions of the self-help content data by searching the self-help content data store for self-help content components that have characteristics that match one or more of the characteristics of the user query;
aggregating (713) the relevant portions of the self-help content data into personalized self-help content data representing personalized self-help content that is relevant to and responsive to the user query by:
matching characteristics of the query intent data with characteristics of the self-help content components to determine which of the self-help content components are responsive to the user query, and
combining the self-help content components that are responsive to the user query into
the personalized self-help content data; and
providing (715) the personalized self-help content data to a client computing environment from which the user query data was received.

2. The customer self-help system of claim 1, wherein the one or more intent extraction algorithms include at least one of a natural language process algorithm and a classifier algorithm.

3. The customer self-help system of preceding claim 2, wherein the one or more intent extraction algorithms include the natural language process algorithm and the natural language process algorithm includes a probabilistic topic model.

4. The customer self-help system of claim 3, wherein the probabilistic topic model is at least partially defined by one or more of a Latent Dirichlet Allocation algorithm, a Latent Semantic Indexing, LSI, algorithm a query clustering algorithm, and a query deduplication algorithm.

5. The customer self-help system of claim 2, wherein the classifier algorithm includes a predictive model.

6. The customer self-help system of claim 5, wherein the predictive model is trained using a training operation that is selected from a group of predictive model training operations, consisting of:
regression; logistic
regression; decision trees;
artificial neural networks;
support vector machines;
linear regression; nearest
neighbor methods;
distance based methods;
naive Bayes;
linear discriminant analysis; and
k-nearest neighbor algorithm.

7. The customer self-help system of any preceding claim, wherein the process further comprises:
receiving the service provider generated content data as a first portion of the self-help content data;
receiving the user generated content data as a second portion of the self-help content data,
wherein determining the self-help content characteristics data includes applying the one or more content processing algorithms to the service provider generated content data and the user generated content data.

8. The customer self-help system of claim 7, wherein the one or more content processing algorithms include one or more of a natural language process algorithm, a classifier algorithm, and a social algorithm, wherein the social algorithm quantifies responses received from users of the customer self-help system and accepts or rejects the self-help content characteristics data determined by one or more of the natural language process algorithm and the classifier algorithm.

9. The customer self-help system of claim 7 or claim 8, wherein the process further comprises:
modifying the self-help content data store to include the self-help content characteristics data, to facilitate generating the personalized self-help content data.

10. The customer self-help system of any preceding claim, wherein the self-help content characteristics data includes one or more of content topics data, content details data, content terms data, content tone data, version data of service provider product, platform data of the client computing system, user characteristics.

11. The customer self-help system of any preceding claim, wherein the user query characteristics data represent categories of data that match categories of data for the self-help content characteristics data.

12. The customer self-help system of any preceding claim, wherein the user query characteristics data include one or more of a version data of service provider product, user communication style preferences data, query title data, query topic data, and metadata that is related to the user query and a client computing system.

13. The customer self-help system of any preceding claim, wherein applying the one or more intent extraction algorithms to the user query data includes applying the one or more intent extraction algorithms to user profile data to facilitate determining the query intent data.

14. The customer self-help system of claim 13, wherein the user profile data includes one or more of navigation history data of navigation history of the user within one or more services of a service provider, wherein the user profile data includes tax return data for the user from one or more prior years.

15. A non-transitory computer-readable medium having a plurality of computer-executable instructions which, when executed by a processor, cause the processor to become configured to perform the process of any of claims 1 to 14.

## Patentansprüche

1. Kundenselbsthilfesystem, umfassend:
mindestens einen Prozessor;
mindestens einen Kommunikationskanal, der mit dem mindestens einen Prozessor gekoppelt ist; und
mindestens einen Speicher, der mit dem mindestens einen Prozessor gekoppelt ist, wobei der mindestens einen Speicher Anweisungen darin gespeichert aufweist, die,
wenn sie von einem Satz des mindestens einen Prozessors ausgeführt werden, einen Prozess zum Erzeugen von personalisiertem Selbsthilfeinhalt durchführen, der auf eine Benutzerabfrage reagiert, wobei der Prozess Folgendes aufweist:
Speichern (405) von Selbsthilfeinhaltsdaten in einem Selbsthilfeinhaltsdatenspeicher, wobei die Selbsthilfeinhaltsdaten vom Dienstanbieter erzeugte Inhaltsdaten und vom Benutzer erzeugte Inhaltsdaten umfassen;
Bestimmen (409) von Selbsthilfeinhaltsmerkmalen, die eine Mehrzahl von Merkmalen der Selbsthilfeinhaltsdaten darstellen, die in dem Selbsthilfeinhaltsdatenspeicher gespeichert sind, unter Verwendung eines oder mehrerer Inhaltsverarbeitungsalgorithmen;
Modifizieren (411) des Selbsthilfeinhaltsdatenspeichers, um die Merkmale des Selbsthilfeinhalts einzubeziehen, um die Selbsthilfeinhaltsdaten in Selbsthilfeinhaltskomponenten zu kategorisieren;
Empfangen von Benutzerabfragedaten, die eine Benutzerabfrage mit einer Mehrzahl von Abfragebegriffen darstellen, mit einem Kundenselbsthilfesystem;
Anwenden eines oder mehrerer Absichtsextraktionsalgorithmen auf die Benutzerabfragedaten, um Abfrageabsichtsdaten zu erzeugen, die eine Abfrageabsicht für die Benutzerabfrage darstellen, wobei die Abfrageabsichtsdaten Benutzerabfragemerkmalsdaten aufweisen, die eine Mehrzahl von Merkmalen der Benutzerabfrage darstellen;
Identifizieren relevanter Teile der Selbsthilfeinhaltsdaten durch Durchsuchen des Selbsthilfeinhaltsdatenspeichers nach Selbsthilfeinhaltskomponenten, die Merkmale aufweisen,
die mit einem oder mehreren der Merkmale der Benutzerabfrage übereinstimmen;
Aggregieren (713) der relevanten Teile der Selbsthilfeinhaltsdaten zu personalisierten Selbsthilfeinhaltsdaten, die personalisierten Selbsthilfeinhalt darstellen, der für die Benutzerabfrage relevant sind und auf diese reagiert,
durch Folgendes:
Vergleichen von Merkmalen der Abfrageabsichtsdaten mit Merkmalen der Selbsthilfeinhaltskomponenten, um zu bestimmen, welche der Selbsthilfeinhaltskomponenten auf die Benutzerabfrage reagieren, und
Kombinieren der Selbsthilfeinhaltskomponenten, die auf die Benutzerabfrage reagieren, zu den personalisierten Selbsthilfeinhaltsdaten; und
Bereitstellen (715) der personalisierten Selbsthilfeinhaltsdaten an eine Client-Computer-Umgebung, von der die Benutzerabfragedaten empfangen wurden.

2. Kundenselbsthilfesystem nach Anspruch 1, wobei der eine oder die mehreren Absichtsextraktionsalgorithmen einen Algorithmus für Prozesse natürlicher Sprache und/oder einen Klassifizierungsalgorithmus aufweisen.

3. Kundenselbsthilfesystem nach dem vorhergehenden Anspruch 2, wobei der eine oder die mehreren Absichtsextraktionsalgorithmen den Algorithmus für Prozesse natürlicher Sprache aufweisen und der Algorithmus für Prozesse natürlicher Sprache ein probabilistisches Themenmodell aufweist.

4. Kundenselbsthilfesystem nach Anspruch 3, wobei das probabilistische Themenmodell zumindest teilweise durch einen oder mehrere von einem Latent Dirichlet Allocation-Algorithmus, einem Latent Semantic Indexing-Algorithmus, LSI-Algorithmus, einem Abfrageclusteralgorithmus und einem Abfragededuplizierungsalgorithmus definiert ist.

5. Kundenselbsthilfesystem nach Anspruch 2, wobei der Klassifizierungsalgorithmus ein Vorhersagemodell aufweist.

6. Kundenselbsthilfesystem nach Anspruch 5, wobei das Vorhersagemodell unter Verwendung einer Trainingsoperation trainiert wird, die aus einer Gruppe von Vorhersagemodelltrainingsoperationen ausgewählt ist, die aus Folgendem besteht:
Regression; logistischer Regression; Entscheidungsbäumen;
künstlichen neuronalen Netzen;
Support-Vektor-Maschinen;
linearer Regression; Nearest- Neighbor-Verfahren;
abstandsbasierten Verfahren;
naivem Bayes;
linearer Diskriminanzanalyse; und
k-Nearest-Neighbor-Algorithmus.

7. Kundenselbsthilfesystem nach einem der vorhergehenden Ansprüche, wobei der Prozess ferner Folgendes umfasst:
Empfangen der vom Dienstanbieter erzeugten Inhaltsdaten als einen ersten Teil der Selbsthilfeinhaltsdaten;
Empfangen der vom Benutzer erzeugten Inhaltsdaten als einen zweiten Teil der Selbsthilfeinhaltsdaten,
wobei das Bestimmen der Selbsthilfeinhaltsmerkmalsdaten Anwenden des einen oder der mehreren Inhaltsverarbeitungsalgorithmen auf die vom Dienstanbieter erzeugten Inhaltsdaten und die vom Benutzer erzeugten Inhaltsdaten aufweist.

8. Kundenselbsthilfesystem nach Anspruch 7, wobei der eine oder die mehreren Inhaltsverarbeitungsalgorithmen einen oder mehrere von einem Algorithmus für Prozesse natürlicher Sprache, einem Klassifizierungsalgorithmus und einem sozialen Algorithmus aufweisen, wobei der soziale Algorithmus Antworten quantifiziert, die von Benutzern des Kundenselbsthilfesystems empfangen werden, und die Selbsthilfeinhaltsmerkmalsdaten akzeptiert oder ablehnt, die durch einen oder mehrere von dem Algorithmus für Prozesse natürlicher Sprache und dem Klassifizierungsalgorithmus bestimmt werden.

9. Kundenselbsthilfesystem nach Anspruch 7 oder Anspruch 8, wobei der Prozess ferner Folgendes umfasst:
Modifizieren des Selbsthilfeinhaltsdatenspeichers, um die Selbsthilfeinhaltsmerkmalsdaten einzubeziehen, um das Erzeugen der personalisierten Selbsthilfeinhaltsdaten zu erleichtern.

10. Kundenselbsthilfesystem nach einem der vorhergehenden Ansprüche, wobei die Selbsthilfeinhaltsmerkmalsdaten eines oder mehrere von Inhaltsthemendaten, Inhaltsdetaildaten, Inhaltsbegriffsdaten, Inhaltstondaten, Versionsdaten des Dienstanbieterprodukts, Plattformdaten des Client-Computer-Systems und Benutzermerkmalen aufweisen.

11. Kundenselbsthilfesystem nach einem der vorhergehenden Ansprüche, wobei die Benutzerabfragemerkmalsdaten Kategorien von Daten darstellen, die mit Kategorien von Daten für die Selbsthilfeinhaltsmerkmalsdaten übereinstimmen.

12. Kundenselbsthilfesystem nach einem der vorhergehenden Ansprüche, wobei die Benutzerabfragemerkmalsdaten eines oder mehrere von Versionsdaten eines Dienstanbieterprodukts, Benutzerkommunikationsstilpräferenzdaten, Abfragetiteldaten, Abfragethemendaten und Metadaten aufweisen, die mit der Benutzerabfrage und einem Client-Computer-System in Beziehung stehen.

13. Kundenselbsthilfesystem nach einem der vorhergehenden Ansprüche, wobei das Anwenden des einen oder der mehreren Absichtsextraktionsalgorithmen auf die Benutzerabfragedaten Anwenden des einen oder der mehreren Absichtsextraktionsalgorithmen auf Benutzerprofildaten aufweist, um das Bestimmen der Abfrageabsichtsdaten zu erleichtern.

14. Kundenselbsthilfesystem nach Anspruch 13, wobei die Benutzerprofildaten eines oder mehrere von Navigationsverlaufsdaten des Navigationsverlaufs des Benutzers innerhalb eines oder mehrerer Dienste eines Dienstanbieters aufweisen, wobei die Benutzerprofildaten Steuererklärungsdaten für den Benutzer aus einem oder mehreren vorherigen Jahren aufweisen.

15. Nichtflüchtiges computerlesbares Medium mit einer Mehrzahl von computerausführbaren Anweisungen, die, wenn sie von einem Prozessor ausgeführt werden, bewirken, dass der Prozessor dazu konfiguriert wird, den Prozess nach einem der Ansprüche 1 bis 14 durchzuführen.

## Revendications

1. Système d'auto-assistance client, comprenant :
au moins un processeur ;
au moins un canal de communication couplé à l'au moins un processeur ; et
au moins une mémoire couplée à l'au moins un processeur, l'au moins une mémoire ayant, stockées dans celle-ci, des instructions qui lorsqu'elles sont exécutées par un quelconque ensemble de l'au moins un processeur, réalisent un procédé pour générer un contenu d'auto-assistance personnalisé qui répond à une interrogation utilisateur, le procédé incluant :
le stockage (405) de données de contenu d'auto-assistance dans un magasin de données de contenu d'auto-assistance, dans lequel les données de contenu d'auto-assistance comprennent des données de contenu générées par fournisseur de service et des données de contenu générées par utilisateur ;
la détermination (409) de caractéristiques de contenu d'auto-assistance représentant une pluralité de caractéristiques des données de contenu d'auto-assistance stockées dans le magasin de données de contenu d'auto-assistance en utilisant un ou plusieurs algorithmes de traitement de contenu ;
la modification (411) du magasin de données de contenu d'auto-assistance pour inclure les caractéristiques du contenu d'auto-assistance pour catégoriser les données de contenu d'auto-assistance en composants de contenu d'auto-assistance ;
la réception, avec un système d'auto-assistance client, de données d'interrogation utilisateur représentant une interrogation utilisateur ayant une pluralité de termes d'interrogation ;
l'application d'un ou de plusieurs algorithmes d'extraction d'intention aux données d'interrogation utilisateur pour générer des données d'intention d'interrogation représentant une intention d'interrogation pour l'interrogation utilisateur, dans lequel les données d'intention d'interrogation incluent des données de caractéristiques d'interrogation utilisateur représentant une pluralité de caractéristiques de l'interrogation utilisateur ;
l'identification de parties pertinentes des données de contenu d'auto-assistance en recherchant, dans le magasin de données de contenu d'auto-assistance, des composants de contenu d'auto-assistance qui ont des caractéristiques qui coïncident avec une ou plusieurs des caractéristiques de l'interrogation utilisateur ;
l'agrégation (713) des parties pertinentes des données de contenu d'auto-assistance en des données de contenu d'auto-assistance personnalisé représentant un contenu d'auto-assistance personnalisé qui est pertinent pour et répond à l'interrogation utilisateur en :
faisant coïncider des caractéristiques des données d'intention d'interrogation avec des caractéristiques des composants de contenu d'auto-assistance pour déterminer les composants, parmi les composants de contenu d'auto-assistance, qui répondent à l'interrogation utilisateur, et
combinant les composants de contenu d'auto-assistance qui répondent à l'interrogation utilisateur en les données de contenu d'auto-assistance personnalisé ; et
la fourniture (715) des données de contenu d'auto-assistance personnalisé à un environnement informatique client en provenance duquel les données d'interrogation utilisateur ont été reçues.

2. Système d'auto-assistance client de la revendication 1, dans lequel l'un ou les plusieurs algorithmes d'extraction d'intention incluent au moins un d'un algorithme de traitement de langage naturel et d'un algorithme classifieur.

3. Système d'auto-assistance client de la revendication précédente 2, dans lequel l'un ou les plusieurs algorithmes d'extraction d'intention incluent l'algorithme de traitement de langage naturel et l'algorithme de traitement de langage naturel inclut un modèle de sujet probabiliste.

4. Système d'auto-assistance client de la revendication 3, dans lequel le modèle de sujet probabiliste est au moins partiellement défini par un ou plusieurs d'un algorithme d'allocation Dirichlet latente, un algorithme d'indexation sémantique latente, « Latent Semantic Indexing » LSI, un algorithme d'agrégation d'interrogation, et un algorithme de déduplication d'interrogation.

5. Système d'auto-assistance client de la revendication 2, dans lequel l'algorithme classifieur inclut un modèle prédictif.

6. Système d'auto-assistance client de la revendication 5, dans lequel le modèle prédictif est entraîné en utilisant une opération d'entraînement qui est sélectionnée parmi un groupe d'opérations d'entraînement de modèle prédictif constitué de :
régression ; régression logistique ; arbres de décision ;
réseau neuronal artificiel ;
machines à vecteurs de support ;
régression linéaire ; méthode du plus proche voisin ;
méthode à base de distance ;
naïve de Bayes ;
analyse discriminante linéaire ; et
algorithme du k-plus proche voisin.

7. Système d'auto-assistance client d'une quelconque revendication précédente, dans lequel le procédé comprend en outre :
la réception des données de contenu générées par fournisseur de service en tant que première partie des données de contenu d'auto-assistance ;
la réception des données de contenu générées par utilisateur en tant que seconde partie des données de contenu d'auto-assistance,
dans lequel la détermination des données de caractéristiques de contenu d'auto-assistance inclut l'application de l'un ou des plusieurs algorithmes de traitement de contenu aux données de contenu générées par fournisseur de service et aux données de contenu générées par utilisateur.

8. Système d'auto-assistance client de la revendication 7, dans lequel l'un ou les plusieurs algorithmes de traitement de contenu incluent un ou plusieurs d'un algorithme de traitement de langage naturel, d'un algorithme classifieur, et d'un algorithme social, dans lequel l'algorithme social quantifie des réponses reçues en provenance d'utilisateurs du système d'auto-assistance client et accepte ou rejette les données de caractéristiques de contenu d'auto-assistance déterminées par un ou plusieurs de l'algorithme de traitement de langage naturel et de l'algorithme classifieur.

9. Système d'auto-assistance client de la revendication 7 ou la revendication 8, dans lequel le procédé comprend en outre :
la modification du magasin de données de contenu d'auto-assistance pour inclure les données de caractéristiques de contenu d'auto-assistance, pour faciliter la génération des données de contenu d'auto-assistance personnalisé.

10. Système d'auto-assistance client d'une quelconque revendication précédente, dans lequel les données de caractéristiques de contenu d'auto-assistance incluent un ou plusieurs types parmi des données de sujet de contenu, des données de détail de contenu, des données de termes de contenu, des données de ton de contenu, des données de version de produit de fournisseur de service, des données de plate-forme du système informatique client, des caractéristiques utilisateur.

11. Système d'auto-assistance client d'une quelconque revendication précédente, dans lequel les données de caractéristiques d'interrogation utilisateur représentent des catégories de données qui coïncident avec des catégories de données pour les données de caractéristiques de contenu d'auto-assistance.

12. Système d'auto-assistance client d'une quelconque revendication précédente, dans lequel les données de caractéristiques d'interrogation utilisateur incluent un ou plusieurs types parmi des données d'une version de produit de fournisseur de service, des données de préférences de style de communication utilisateur, des données de titre d'interrogation, des données de sujet d'interrogation, et des métadonnées qui sont connexes à l'interrogation utilisateur et un système informatique client.

13. Système d'auto-assistance client d'une quelconque revendication précédente, dans lequel l'application de l'un ou des plusieurs algorithmes d'extraction d'intention aux données d'interrogation utilisateur inclut l'application de l'un ou des plusieurs algorithmes d'extraction d'intention à des données de profil utilisateur pour faciliter la détermination des données d'intention d'interrogation.

14. Système d'auto-assistance client de la revendication 13, dans lequel les données de profil utilisateur incluent une ou plusieurs parmi des données d'historique de navigation d'historique de navigation de l'utilisateur au sein d'un ou de plusieurs services d'une fournisseur de service, dans lequel les données de profil utilisateur incluent des données de déclaration de revenus pour l'utilisateur d'une ou de plusieurs années antérieures.

15. Support non transitoire lisible par ordinateur ayant une pluralité d'instructions exécutables par ordinateur qui, lorsqu'elles sont exécutées par un processeur, amènent le processeur à être configuré pour réaliser le procédé de quelconques des revendications 1 à 14.
